(19) Europäisches Patentamt / European Patent Office / Office européen des brevets

(11) **EP 2 838 262 A1**

(12) **EUROPEAN PATENT APPLICATION**
published in accordance with Art. 153(4) EPC

(43) Date of publication:
**18.02.2015 Bulletin 2015/08**

(51) Int Cl.:
***H04N 7/32*** (0000.00)

(21) Application number: **13778585.3**

(22) Date of filing: **16.04.2013**

(86) International application number:
**PCT/KR2013/003187**

(87) International publication number:
**WO 2013/157817 (24.10.2013 Gazette 2013/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.04.2012 US 201261624461 P**

(71) Applicant: **Samsung Electronics Co., Ltd.**
**Suwon-si, Gyeonggi-do 443-742 (KR)**

(72) Inventors:
• **CHOI, Byeong-doo**
  **Siheung-si**
  **Gyeonggi-do 429-717 (KR)**
• **LEE, Tammy**
  **Seoul 137-070 (KR)**
• **PARK, Jeong-hoon**
  **Seoul 151-050 (KR)**

(74) Representative: **Jones, Ithel Rhys**
**Appleyard Lees**
**15 Clare Road**
**Halifax, Yorkshire HX1 2HY (GB)**

(54) **METHOD FOR MULTI-VIEW VIDEO ENCODING BASED ON TREE STRUCTURE ENCODING UNIT AND APPARATUS FOR SAME, AND METHOD FOR MULTI-VIEW VIDEO DECODING BASED ON TREE STRUCTURE ENCODING UNIT AND APPARATUS FOR SAME**

(57)     Provided are multiview video inter-layer encoding and decoding based on coding units of a tree structure. A video encoding method includes operations of encoding a base layer image that is one of a base view texture image and a base view depth image of a base view image, based on coding units of a tree structure that are among coding units obtained by hierarchically splitting a maximum coding unit of an image, determining an inter-layer encoding mode for performing inter-layer encoding on an additional view image by referring to the base layer image based on the coding units of the tree structure, and referring to an additional layer image including the additional view image, based on the inter-layer encoding mode.

FIG. 14

**Description**

TECHNICAL FIELD

The present invention relates to encoding and decoding a multiview video.

BACKGROUND ART

As hardware for reproducing and storing high resolution or high quality video content is being developed and supplied, a need for a video codec for effectively encoding or decoding the high resolution or high quality video content is increasing. According to a video codec of the related art, a video is encoded according to a limited encoding method based on a macroblock having a predetermined size.

Image data of a spatial domain is transformed into coefficients of a frequency domain via frequency transformation. According to a video codec, an image is split into blocks of predetermined size, discrete cosine transformation (DCT) is performed on each block, and frequency coefficients are encoded in block units, for rapid calculation of frequency transformation. Compared with image data of a spatial domain, coefficients of a frequency domain are easily compressed. In particular, since an image pixel value of a spatial domain is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

With the demand for video captured at multiple views, an amount of video data that increases in proportion to the number of views can be a problem. Thus, much effort is being continuously made to effectively encode a multiview video.

DETAILED DESCRIPTION OF THE INVENTION

TECHNICAL PROBLEM

The present invention provides a method of prediction encoding and prediction decoding a base view image and an additional view image as separate layers. The present invention also provides a method of prediction encoding and prediction decoding a texture image and a depth image, which are from the same view image, as separate layers.

TECHNICAL SOLUTION

According to an aspect of the present invention, there is provided a multiview video inter-layer encoding method including operations of encoding a base layer image that is one of a base view texture image and a base view depth image of a base view image, based on coding units of a tree structure that comprise coding units that are completely split among coding units obtained by hierarchically splitting a maximum coding unit of an image; performing prediction encoding on an additional view texture image and an additional view depth image of an additional view image, as separate additional layer images, by referring to a predetermined inter-layer encoding mode and encoding information of the base layer image based on the coding units of the tree structure, wherein the additional view image is not the base layer image but is the other one of the base view texture image and the base view depth image; and outputting an encoding mode and a prediction value of the base view image, and an inter-layer encoding mode of the additional view image, based on the predetermined inter-layer encoding mode, wherein each of maximum coding units obtained by spatially splitting the image of a video is split into a plurality of coding units, and it is determined whether to split each of the plurality of coding units into smaller coding units, independently from an adjacent coding unit.

ADVANTAGEOUS EFFECTS

One of a base view texture image and a base view depth image of a multiview video is assigned as a base layer image, and the other one of the base view images, an additional view texture image, and an additional view depth image are assigned as an additional layer image, so that inter-layer prediction is performed on the multiview video. Since a base layer data unit and an additional layer data unit that correspond to each other between a base layer image and an additional layer image that are encoded by using coding units, prediction units, and transformation units according to a tree structure are correctly detected, and the additional layer data unit is determined by using various types of encoding information of the base layer data unit, an amount of transmission bits of encoding information for the additional layer image may be decreased, and a method of encoding and decoding an inter-layer video may be efficiently embodied.

DESCRIPTION OF THE DRAWINGS

FIG. 1 is a block diagram of a video encoding apparatus based on coding units of a tree structure, according to an embodiment of the present invention.

FIG. 2 is a block diagram of a video decoding apparatus based on coding units of a tree structure, according to an embodiment of the present invention.

FIG. 3 is a diagram for describing a concept of coding units according to an embodiment of the present invention.

FIG. 4 is a block diagram of an image encoder based on coding units, according to an embodiment of the present invention.

FIG. 5 is a block diagram of an image decoder based on coding units, according to an embodiment of the present invention.

FIG. 6 is a diagram illustrating deeper coding units according to depths, and partitions, according to an embodiment of the present invention.

FIG. 7 is a diagram for describing a relationship between a coding unit and transformation units, according to an embodiment of the present invention.

FIG. 8 illustrates a plurality of pieces of encoding information according to depths, according to an embodiment of the present invention.

FIG. 9 is a diagram of deeper coding units according to depths, according to an embodiment of the present invention.

FIGS. 10, 11, and 12 are diagrams for describing a relationship between coding units, prediction units, and transformation units, according to an embodiment of the present invention.

FIG. 13 is a diagram for describing a relationship between a coding unit, a prediction unit, and a transformation unit, according to encoding mode information of Table 1.

FIG. 14 is a block diagram of a multiview video inter-layer encoding apparatus, according to an embodiment of the present invention.

FIG. 15 is a block diagram of a multiview video inter-layer decoding apparatus, according to an embodiment of the present invention.

FIG. 16 is a block diagram of an inter-layer encoding system, according to an embodiment of the present invention.

FIG. 17 illustrates an inter-layer encoding system for a multiview video, according to an embodiment of the present invention.

FIG. 18 illustrates a transmitting and receiving system for a multiview video service, according to an embodiment of the present invention.

FIG. 19 illustrates an inter-layer prediction structure of a multiview video, according to an embodiment of the present invention.

FIG. 20 illustrates types of an inter-layer prediction mode, according to an embodiment of the present invention.

FIG. 21 illustrates a mapping relation between a base layer and an additional layer, according to an embodiment of the present invention.

FIG. 22 is a flowchart of a multiview video inter-layer encoding method, according to an embodiment of the present invention.

FIG. 23 is a flowchart of a multiview video inter-layer decoding method, according to an embodiment of the present invention.

FIG. 24 is a diagram of a physical structure of a disc in which a program is stored, according to an embodiment of the present invention.

FIG. 25 is a diagram of a disc drive for recording and reading a program by using a disc.

FIG. 26 is a diagram of an overall structure of a content supply system for providing a content distribution service.

FIGS. 27 and 28 are diagrams respectively of an external structure and an internal structure of a mobile phone to which a video encoding method and a video decoding method are applied, according to an embodiment of the present invention.

FIG. 29 is a diagram of a digital broadcast system to which a communication system is applied, according to an embodiment of the present invention.

FIG. 30 is a diagram illustrating a network structure of a cloud computing system using a video encoding apparatus and a video decoding apparatus, according to an embodiment of the present invention.

BEST MODE

According to an aspect of the present invention, there is provided a multiview video inter-layer encoding method including operations of encoding a base layer image that is one of a base view texture image and a base view depth image of a base view image, based on coding units of a tree structure that comprise coding units that are completely split among coding units obtained by hierarchically splitting a maximum coding unit of an image; performing prediction encoding on an additional view texture image and an additional view depth image of an additional view image, as separate additional layer images, by referring to a predetermined inter-layer encoding mode and encoding information of the base layer image based on the coding units of the tree structure, wherein the additional view image is not the base layer image but is the other one of the base view texture image and the base view depth image; and outputting an encoding mode and a prediction value of the base view image, and an inter-layer encoding mode of the additional view image, based on the predetermined inter-layer encoding mode, wherein each of maximum coding units obtained by spatially splitting the image of a video is split into a plurality of coding units, and it is determined whether to split each of the plurality of coding units into smaller coding units, independently from an adjacent coding unit.

The operation of encoding the base layer image may include an operation of encoding one of a base view texture image and a base view depth image, and the operation of performing the prediction encoding of the additional view image may include an operation of encoding the other one of the base view texture image and the base view depth image by referring to encoding information according to the predetermined inter-layer encoding mode, wherein the encoding information is generated by encoding one of the base view texture image and the base view depth image.

The operation of performing the prediction encoding of the additional view image may include operations of encoding one of the additional view texture image and the additional view depth image; and encoding the other one of the additional view texture image and the additional view depth image by referring to encoding information according to the predetermined inter-layer encoding mode, wherein the encoding information is generated by encoding one of the base view texture image, the base view depth image, the additional view texture image, and the additional view depth image.

The operation of encoding the base layer image may include operations of encoding at least one of the base view texture image and the base view depth image by referring to encoding information of the base view texture image; and encoding at least one of the base view texture image and the base view depth image by referring to encoding information of the base view depth image.

The operation of performing the prediction encoding of the additional view image may include an operation of determining a data unit of the base view image that is to be referred to by a data unit of the additional view image, based on a disparity between the base view image and the additional view image.

The operation of determining the data unit may include an operation of determining a position of a data unit of the base view image that is mapped with a current data unit of the additional view image, by using a disparity between the current data unit of the additional view image and the base view image.

The operation of determining the data unit may include operations of determining the disparity between the current data unit of the additional view image and the base view image by using a disparity or depth information that is previously used in the base view depth image or a neighboring data unit of the additional view image; and determining the position of the data unit of the base view image that is mapped with the current data unit, by using the determined disparity.

According to another aspect of the present invention, there is provided a multiview video inter-layer decoding method including operations of parsing encoding information of a base layer image, and an inter-layer encoding mode between the base layer image and an additional layer image, from bitstreams that respectively comprise a base view texture image of a base view image, a base view depth image of the base view image, an additional view texture image of an additional view image, and an additional view depth image of the additional view image, as separate layers; by using the parsed encoding information of the base layer image, decoding a base layer image that is one of the base view texture image and the base view depth image of the base view image, based on coding units of a tree structure that comprise coding units that are completely split among coding units obtained by hierarchically splitting a maximum coding unit; and performing prediction decoding on the additional view texture image and the additional view depth image of the additional view image, as separate additional layer images, based on the coding units of the tree structure, by referring to the parsed encoding information of the base layer image according to an inter-layer encoding mode of the additional view image, wherein the additional view image is not the base layer image but is the other one of the base view texture image and the base view depth image, wherein each of maximum coding units obtained by spatially splitting an image of a video is split into a plurality of coding units, and it was determined whether to separately split each of the plurality of coding units into smaller coding units independently from an adjacent coding unit.

The operation of decoding the base layer image may include an operation of decoding one of the base view texture image and the base view depth image, and the operation of performing the prediction decoding of the additional view texture image may include an operation of decoding the other one of the base view texture image and the base view depth image by referring to the parsed encoding information of the base layer image according to the inter-layer encoding mode.

The operation of performing the prediction decoding of the additional view texture image may include operations of decoding one of the additional view texture image and the additional view depth image; and decoding the other one of the additional view texture image and the additional view depth image by referring to encoding information of one of the base view texture image, the base view depth image, the additional view texture image, and the additional view depth image according to the inter-layer encoding mode.

The operation of performing prediction decoding of the additional view texture image may include operations of encoding at least one of the base view texture image and the base view depth image by referring to encoding information of the base view texture image; and encoding at least one of the base view texture image and the base view depth image by referring to encoding information of the base view depth image.

The operation of performing the prediction decoding of the additional view texture image may include an operation of determining a data unit of the base view image that is to be referred to by a current data unit of the additional view image, by using disparity information between the current data unit of the additional view image and the base view image.

The operation of determining the data unit may include an operation of determining a position of a data unit of the base view image that is mapped with the current data unit, by using the disparity information between the current data unit of the additional view image and the base view image.

The operation of determining the data unit may include operations of determining the disparity information between the current data unit of the additional view image and the base view image by using disparity information or depth information that is previously used in the base view depth image or a neighbouring data unit of the additional view image; and determining the position of the data unit of the base view image that is mapped with the current data unit, by using the determined disparity information.

According to another aspect of the present invention, there is provided a multiview video inter-layer encoding apparatus including a base layer encoder for encoding a base layer image that is one of a base view texture image and a base view depth image of a base view image, based on coding units of a tree structure that comprise coding units that are completely split among coding units obtained by hierarchically splitting a maximum coding unit of an image; an additional layer encoder for performing prediction encoding on an additional view texture image and an additional view depth image of an additional view image, as separate additional layer images, by referring to a predetermined inter-layer encoding mode and encoding information of the base layer image based on the coding units of the tree structure, wherein the additional view image is not the base layer image but is the other one of the base view texture image and the base view depth image; and an output unit for outputting encoding information of the base view image, and an inter-layer encoding mode of the additional view image, based on the predetermined inter-layer encoding mode, wherein each of maximum coding units obtained by spatially splitting the image of a video is split into a plurality of coding units, and it is determined whether to separately split each of the plurality of coding units into smaller coding independently from an adjacent coding unit.

The additional layer encoding unit may determine a data unit of the base view image that is to be referred to by a data unit of the additional view image, based on a disparity between the base view image and the additional view image.

According to another aspect of the present invention, there is provided a multiview video inter-layer decoding apparatus including a parser for parsing encoding information of a base layer image, and an inter-layer encoding mode between the base layer image and an additional layer image, from bitstreams that respectively comprise a base view texture image of a base view image, a base view depth image of the base view image, an additional view texture image of an additional view image, and an additional view depth image of the additional view image, as separate layers; a base layer decoder for, by using the parsed encoding information of the base layer image, decoding a base layer image that is one of the base view texture image and the base view depth image of the base view image, based on coding units of a tree structure that comprise coding units that are completely split among coding units obtained by hierarchically splitting a maximum coding unit; and an additional layer decoder for performing prediction decoding on the additional view texture image and the additional view depth image of the additional view image, as separate additional layer images, based on the coding units of the tree structure, by referring to the parsed encoding information of the base layer image according to an inter-layer encoding mode of the additional view image, wherein the additional view image is not the base layer image but is the other one of the base view texture image and the base view depth image.

The additional layer decoding unit may determine a data unit of the base view image that is to be referred to by a current data unit of the additional view image, by using disparity information between the current data unit of the additional view image and the base view image.

According to another aspect of the present invention, there is provided a computer-readable recording medium having recorded thereon a program for executing a multiview video inter-layer encoding method. According to another aspect of the present invention, there is provided a computer-readable recording medium having recorded thereon a program for executing a multiview video inter-layer decoding method.

MODE OF THE INVENTION

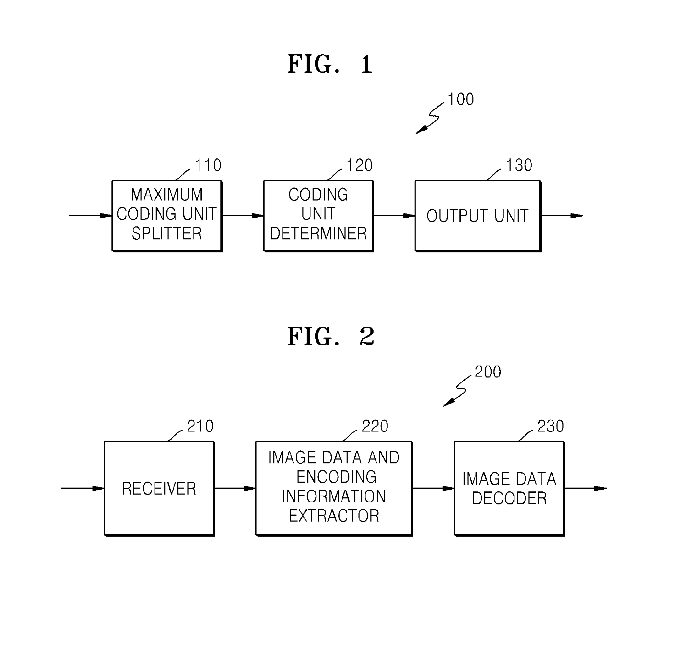

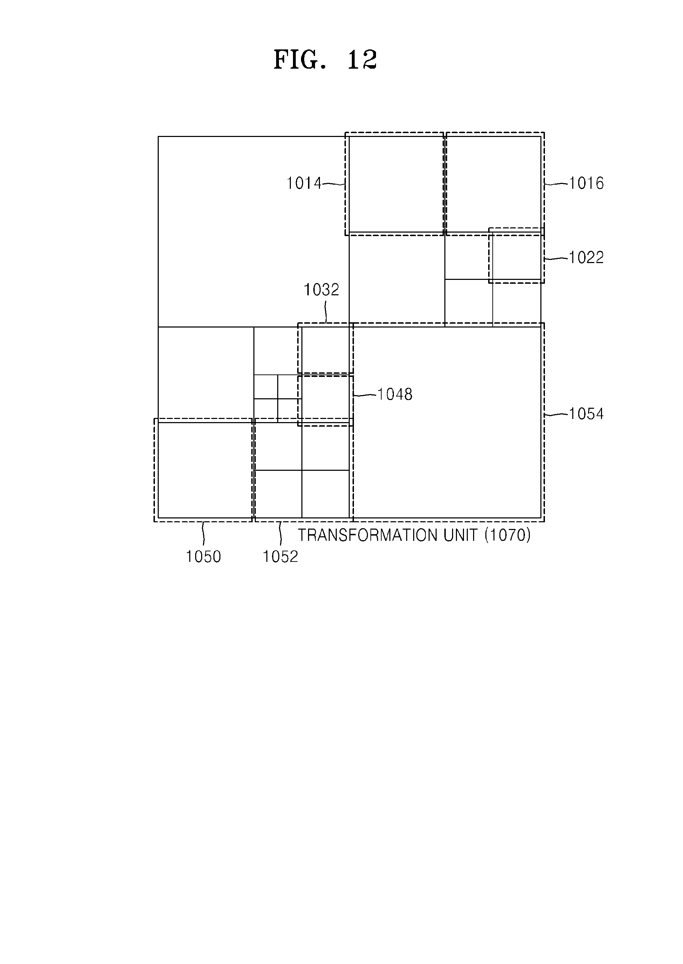

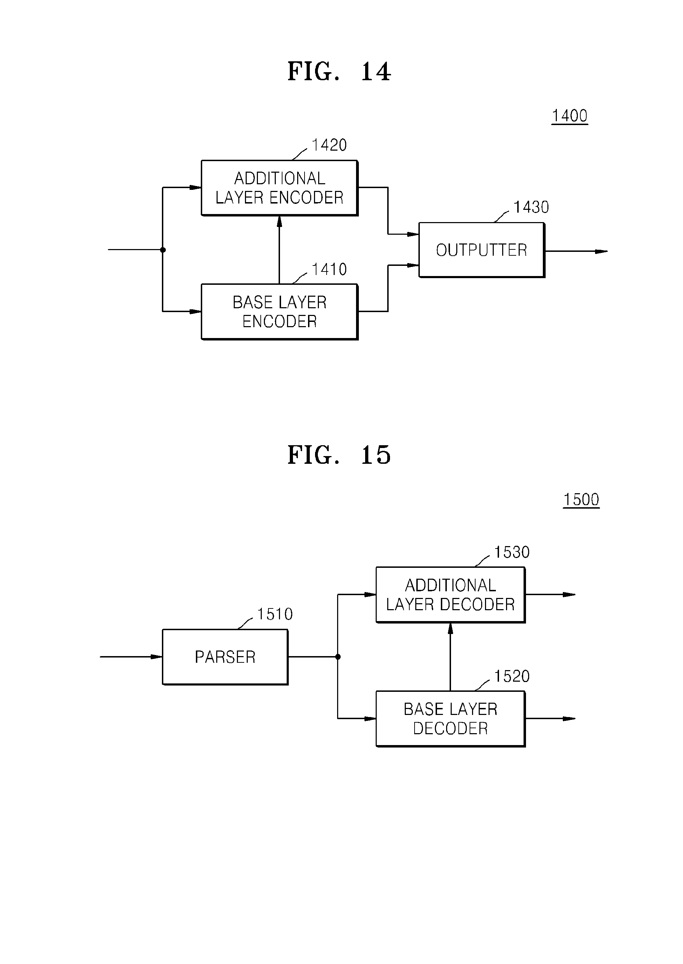

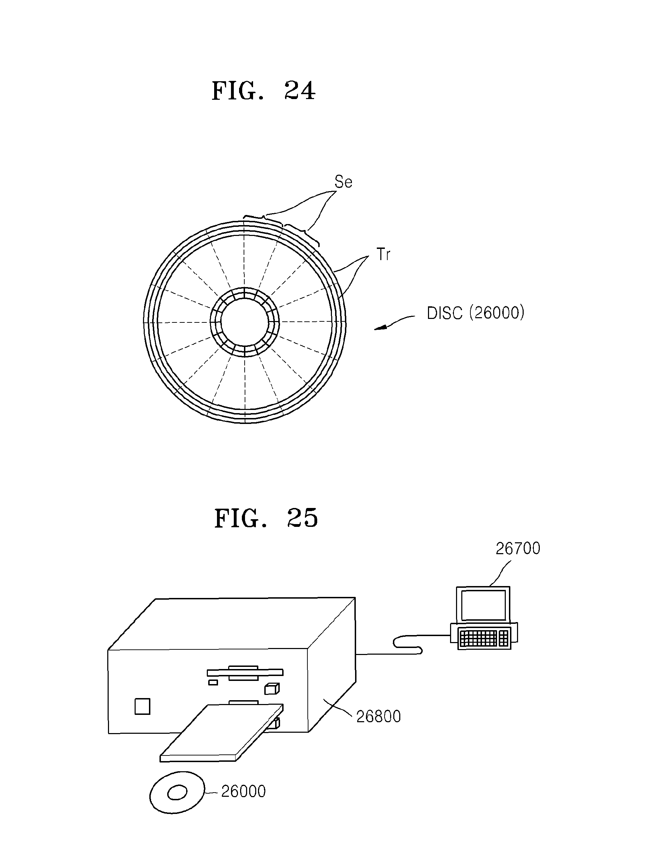

Hereinafter, a video encoding technique and a video decoding technique based on coding units of a tree structure, according to embodiments of the present invention, will be described with reference to FIGS. 1 through 13. Also, a multiview video inter-layer encoding technique and a multiview video inter-layer decoding technique based on coding units of a tree structure, according to embodiments of the present invention, will be described with reference to FIGS. 14 through 23. Also, various embodiments to which a multiview video encoding method, a multiview video decoding method, a video encoding method, and a video decoding method may be applied are provided with reference to FIGS. 24 through 30. Hereinafter, an 'image' may indicate a still image or a moving image of a video, or a video itself.

First, the video encoding technique and the video decoding technique based on coding units of a tree structure will be described with reference to FIGS. 1 through 13.

FIG. 1 is a block diagram of a video encoding apparatus based on coding units of a tree structure 100, according to an embodiment of the present invention.

The video encoding apparatus involving video prediction based on coding units of the tree structure 100 includes a maximum coding unit splitter 110, a coding unit determiner 120, and an output unit 130. Hereinafter, for convenience of description, the video encoding apparatus involving video prediction based on coding units of the tree structure 100 is referred as ' video encoding apparatus 100'.

The maximum coding unit splitter 110 may split a current picture based on a maximum coding unit that is a coding unit having a maximum size for a current picture of an image. If the current picture is larger than the maximum coding unit, image data of the current picture may be split into the at least one maximum coding unit. The maximum coding unit according to an embodiment of the present invention may be a data unit having a size of 32x32, 64x64, 128x128, 256x256, etc., wherein a shape of the data unit is a square having a width and length in squares of 2. The image data may be output to the coding unit determiner 120 according to the at least one maximum coding unit.

A coding unit according to an embodiment of the present invention may be characterized by a maximum size and a depth. The depth denotes the number of times the coding unit is spatially split from the maximum coding unit, and as the depth deepens, deeper coding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment of the present invention is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split, may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the deeper coding units according to depths, according to the maximum coding unit of the current picture, and selecting a depth having the least encoding error. The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth to a lower depth by measuring an encoding error of the image data of the each coding unit, separately. Accordingly, even when image data is included in one maximum coding unit, the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 may determine coding units having a tree structure included in the maximum coding unit. The 'coding units having a tree structure' according to an embodiment of the present invention include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment of the present invention is an index related to the number of splitting times from a maximum coding unit to a minimum coding unit. A first maximum depth according to an embodiment of the present invention may denote the total number of splitting times from the maximum coding unit to the minimum coding unit. A second maximum depth according to an embodiment of the present invention may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3, and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding, including the prediction encoding and the transformation, is performed on all of the deeper coding units generated as the depth deepens. For convenience of description, the prediction encoding and the transformation will now be described based on a coding unit of a current depth, in a maximum coding unit.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth, i.e., based on a coding unit that is no longer split into coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one selected from a height and a width of the prediction unit. A partition is a data unit where a prediction unit of a coding unit is split, and a prediction unit may be a partition having the same size as a coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one selected from an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the data unit for the transformation may include a data unit for an intra mode and a data unit for an inter mode.

The transformation unit in the coding unit may be recursively split into smaller sized regions in the similar manner as the coding unit according to the tree structure. Thus, residual data in the coding unit may be divided according to the transformation unit having the tree structure according to transformation depths.

A transformation depth indicating the number of splitting times to reach the transformation unit by splitting the height and width of the coding unit may also be set in the transformation unit. For example, in a current coding unit of 2Nx2N, a transformation depth may be 0 when the size of a transformation unit is 2Nx2N, may be 1 when the size of the transformation unit is NxN, and may be 2 when the size of the transformation unit is N/2xN/2. In other words, the transformation unit having the tree structure may be set according to the transformation depths.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

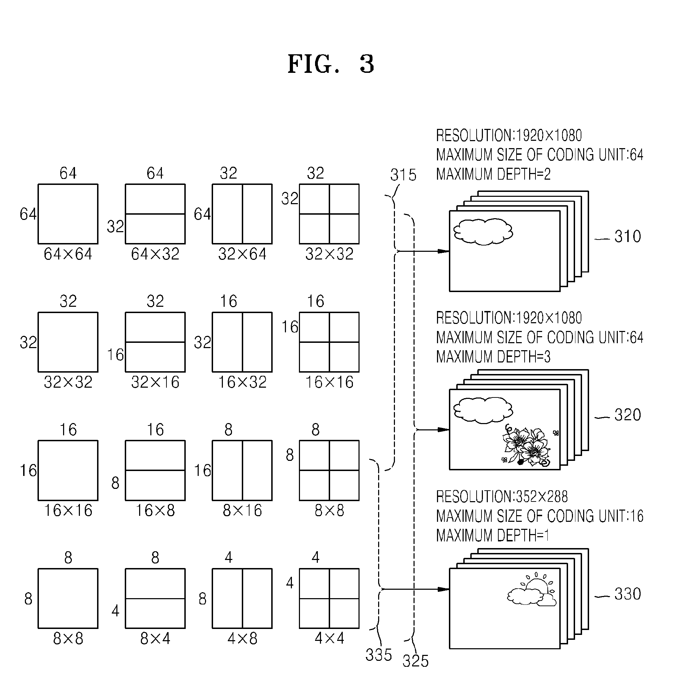

Coding units according to a tree structure in a maximum coding unit and methods of determining a prediction unit/partition, and a transformation unit, according to embodiments of the present invention, will be described in detail later with reference to FIGS. 3 through 13.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 130 may assign encoding information about a corresponding coded depth and an encoding mode to at least one of the coding unit, the prediction unit, and a minimum unit included in the maximum coding unit.

The minimum unit according to an embodiment of the present invention is a square data unit obtained by splitting the minimum coding unit constituting the lowermost depth by 4. Alternatively, the minimum unit according to an embodiment may be a maximum square data unit that may be included in all of the coding units, prediction units, partition units, and transformation units included in the maximum coding unit.

For example, the encoding information output by the output unit 130 may be classified into encoding information according to deeper coding units, and encoding information according to prediction units. The encoding information according to the deeper coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Information about a maximum size of the coding unit defined according to pictures, slices, or GOPs, and information about a maximum depth may be inserted into a header of a bitstream, a sequence parameter set, or a picture parameter set.

Information about a maximum size of the transformation unit permitted with respect to a current video, and information about a minimum size of the transformation unit may also be output through a header of a bitstream, a sequence parameter set, or a picture parameter set. The output unit 130 may encode and output reference information related to prediction, prediction information, and slice type information.

In the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit with the current depth having a size of 2Nx2N may include a maximum of 4 of the coding units with the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having a high resolution or a large data amount is encoded in a conventional macroblock, the number of macroblocks per picture excessively increases. Accordingly, the number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

FIG. 2 is a block diagram of a video decoding apparatus based on coding units of a tree structure 200, according to an embodiment of the present invention.

The video decoding apparatus involving video prediction based on coding units of the tree structure 200 includes a receiver 210, an image data and encoding information extractor 220, and an image data decoder 230. Hereinafter, for convenience of description, the video decoding apparatus involving video prediction based on coding units of the tree structure 200 is referred as 'video decoding apparatus 200'.

Definitions of various terms, such as a coding unit, a depth, a prediction unit, a transformation unit, and information about various encoding modes, for decoding operations of the video decoding apparatus 200 are identical to those described with reference to FIG. 1 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a sequence parameter set, or a picture parameter set.

Also, the image data and encoding information extractor 220 extracts information about a coded depth and an encoding mode for the coding units having a tree structure according to each maximum coding unit, from the parsed bitstream. The extracted information about the coded depth and the encoding mode is output to the image data decoder 230. In other words, the image data in a bit stream is split into the maximum coding unit so that the image data decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each maximum coding unit. Accordingly, the video decoding apparatus 200 may restore an image by decoding the image data according to a coded depth and an encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. If information about a coded depth and encoding mode of a corresponding maximum coding unit is recorded according to predetermined data units, the predetermined data units to which the same information about the coded depth and the encoding mode is assigned may be inferred to be the data units included in the same maximum coding unit.

The image data decoder 230 restores the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include a prediction including intra prediction and motion compensation, and an inverse transformation.

The image data decoder 230 may perform intra prediction or motion compensation according to a partition and a prediction mode of each coding unit, based on the information about the partition type and the prediction mode of the prediction unit of the coding unit according to coded depths.

In addition, the image data decoder 230 may read information about a transformation unit according to a tree structure for each coding unit so as to perform inverse transformation based on transformation units for each coding unit, for inverse transformation for each maximum coding unit. Via the inverse transformation, a pixel value of a spatial region of the coding unit may be restored.

The image data decoder 230 may determine a coded depth of a current maximum coding unit by using split information according to depths. If the split information indicates that image data is no longer split in the current depth, the current depth is a coded depth. Accordingly, the image data decoder 230 may decode encoded data in the current maximum coding unit by using the information about the partition type of the prediction unit, the prediction mode, and the size of the transformation unit for each coding unit corresponding to the coded depth.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. As such, the current coding unit may be decoded by obtaining the information about the encoding mode for each coding unit.

Thus, the video decoding apparatus 200 may obtain information about at least one coding unit that generates the minimum encoding error when encoding is recursively performed for each maximum coding unit, and may use the information to decode the current picture. In other words, the coding units having the tree structure determined to be the optimum coding units in each maximum coding unit may be decoded.

Accordingly, even if image data has high resolution and a large amount of data, the image data may be efficiently decoded and restored by using a size of a coding unit and an encoding mode, which are adaptively determined according to characteristics of the image data, by using information about an optimum encoding mode received from an encoder.

FIG. 3 is a diagram for describing a concept of coding units according to an embodiment of the present invention.

A size of a coding unit may be expressed by width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 3 denotes a total number of splits from a maximum coding unit to a minimum decoder.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having a higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. On the other hand, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

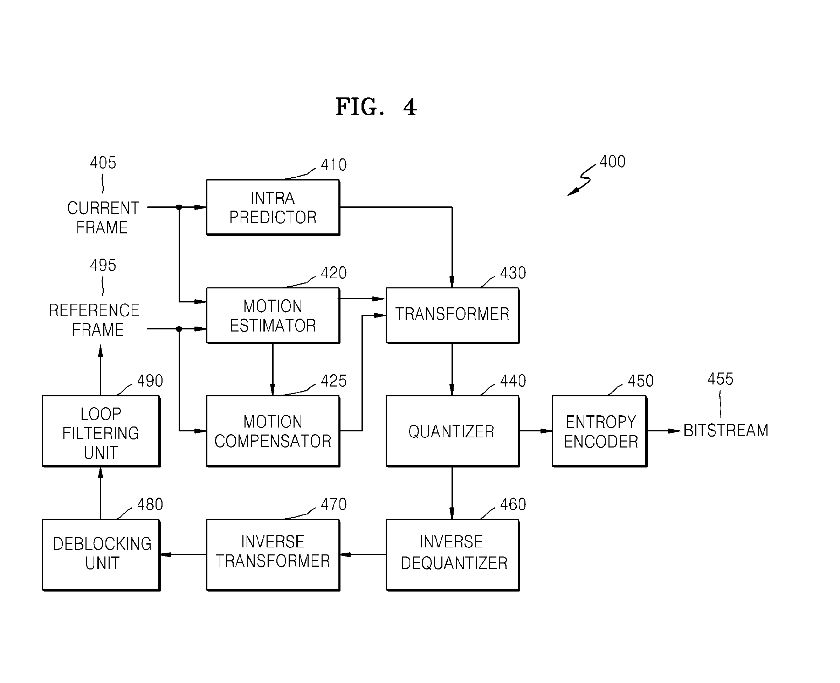

FIG. 4 is a block diagram of an image encoder 400 based on coding units, according to an embodiment of the present invention.

The image encoder 400 performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 respectively perform inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is restored as data in a spatial domain through an inverse quantizer 460 and an inverse transformer 470, and the restored data in the spatial domain is output as the reference frame 495 after being post-processed through a deblocking unit 480 and an offset adjusting unit 490. The quantized transformation coefficient may be output as a bitstream 455 through an entropy encoder 450.

In order for the image encoder 400 to be applied in the video encoding apparatus 100, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the offset adjusting unit 490 perform operations based on each coding unit among coding units having a tree structure while considering the maximum depth of each maximum coding unit.

Specifically, the intra predictor 410, the motion estimator 420, and the motion compensator 425 determine partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

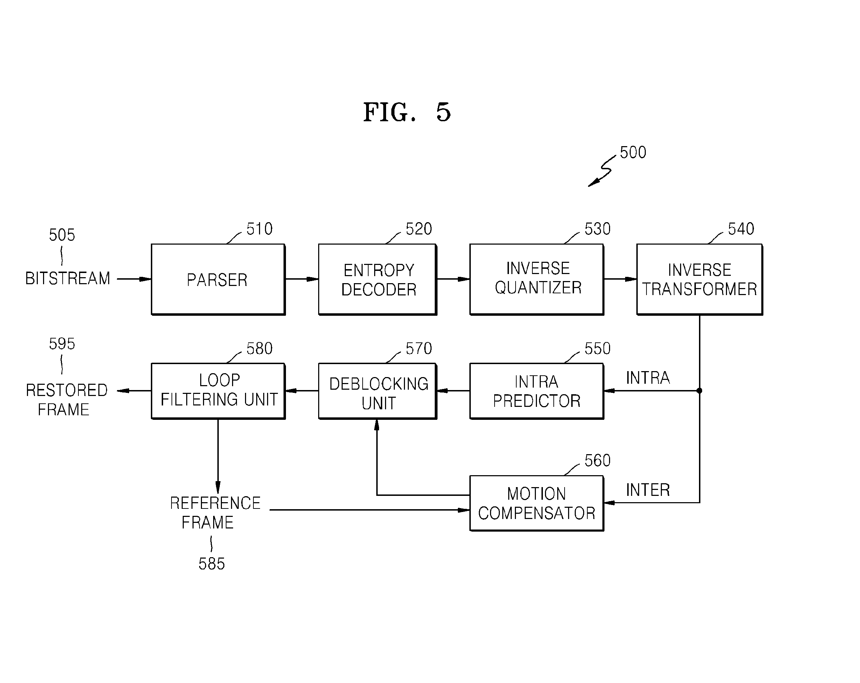

FIG. 5 is a block diagram of an image decoder 500 based on coding units, according to an embodiment of the present invention.

A parser 510 parses encoded image data to be decoded and information about encoding required for decoding from a bitstream 505. The encoded image data is output as inverse quantized data through an entropy decoder 520 and an inverse quantizer 530, and the inverse quantized data is restored to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which passed through the intra predictor 550 and the motion compensator 560, may be output as a restored frame 595 after being post-processed through a deblocking unit 570 and an offset adjusting unit 580. Also, the image data that is post-processed through the deblocking unit 570 and the offset adjusting unit 580 may be output as the reference frame 585.

In order to decode the image data in the image data decoder 230 of the video decoding apparatus 200, the image decoder 500 may perform operations that are performed after the parser 510.

In order for the image decoder 500 to be applied in the video decoding apparatus 200, all elements of the image decoder 500, i.e., the parser 510, the entropy decoder 520, the inverse quantizer 530, the inverse transformer 540, the intra predictor 550, the motion compensator 560, the deblocking unit 570, and the offset adjusting unit 580 perform operations based on coding units having a tree structure for each maximum coding unit.

Specifically, the intra prediction 550 and the motion compensator 560 have to determine partitions and a prediction mode for each of the coding units having a tree structure, and the inverse transformer 540 have to determine a size of a transformation unit for each coding unit.

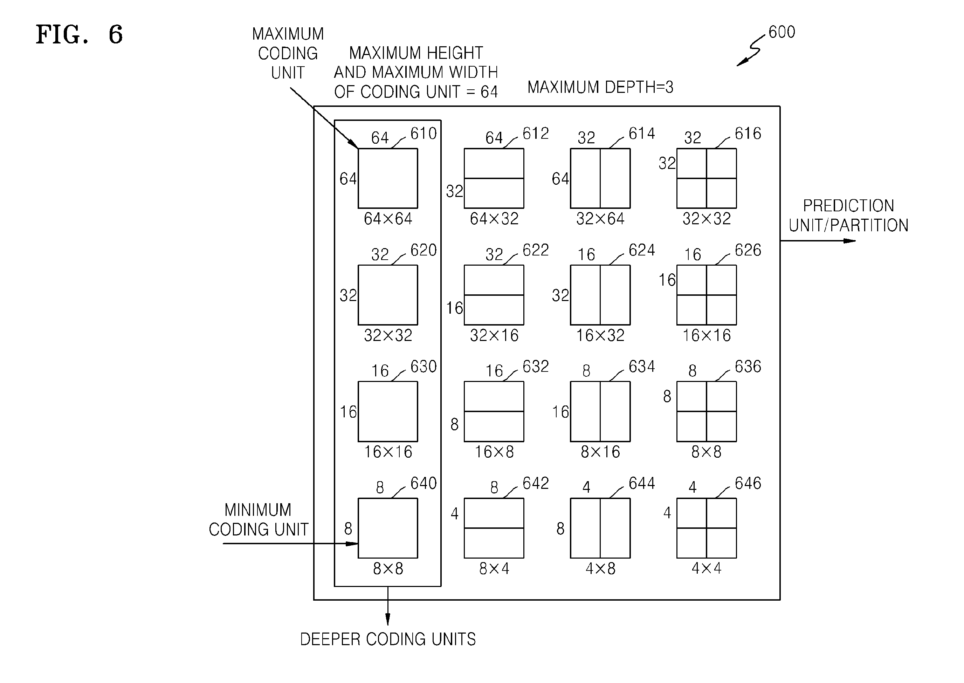

FIG. 6 is a diagram illustrating deeper coding units according to depths, and partitions, according to an embodiment of the present invention.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to an embodiment of the present invention, the maximum height and the maximum width of the coding units are each 64, and the maximum depth is 3. In this case, the maximum depth refers to a total number of times the coding unit is split from the maximum coding unit to the minimum coding unit. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3. The coding unit 640 having the size of 8x8 and the depth of 3 is a minimum coding unit.

The prediction unit and the partitions of a coding unit are arranged along the horizontal axis according to each depth. In other words, if the coding unit 610 having a size of 64x64 and a depth of 0 is a prediction unit, the prediction unit may be split into partitions include in the encoder 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

Lastly, the coding unit 640 having the size of 8x8 and the depth of 3 is a minimum coding unit having a lowermost depth.

In order to determine the at least one coded depth of the coding units constituting the maximum coding unit 610, the coding unit determiner 120 of the video encoding apparatus 100 performs encoding for coding units corresponding to each depth included in the maximum coding unit 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error that is a representative encoding error may be selected for the current depth by performing encoding for each prediction unit in the coding units corresponding to the current depth, along the horizontal axis of the hierarchical structure 600. Alternatively, the minimum encoding error may be searched for by comparing representative encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

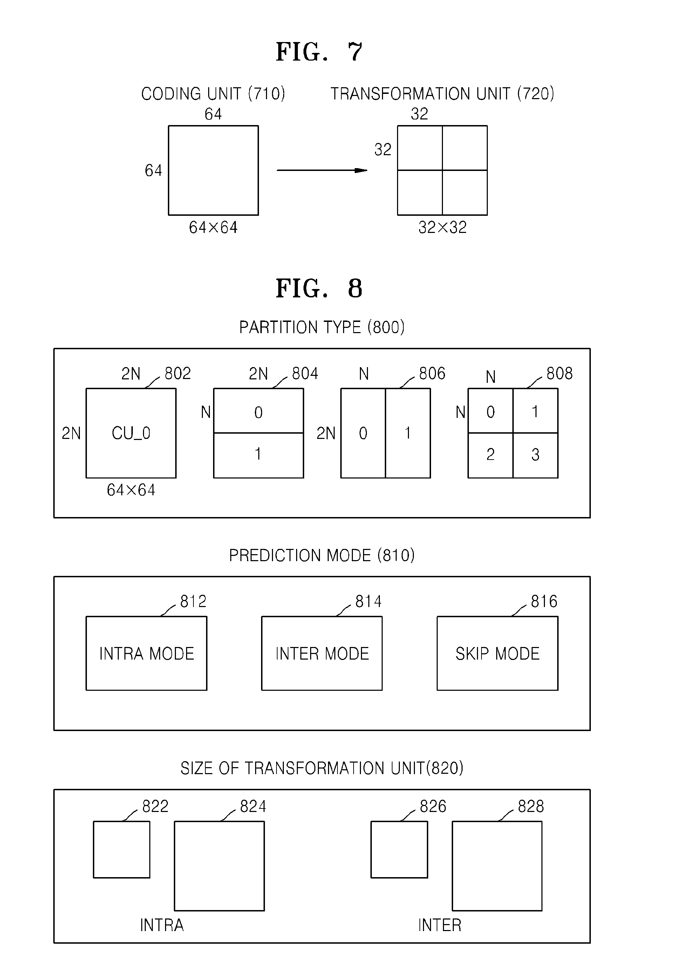

FIG. 7 is a diagram for describing a relationship between a coding unit 710 and transformation units 720, according to an embodiment of the present invention.

The video encoding apparatus 100 or the video decoding apparatus 200 encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 or the video decoding apparatus 200, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 8 illustrates a plurality of pieces of encoding information according to depths, according to an embodiment of the present invention.

The output unit 130 of the video encoding apparatus 100 may encode and transmit information 800 about a partition type, information 810 about a prediction mode, and information 820 about a size of a transformation unit for each coding unit corresponding to a coded depth, as information about an encoding mode.

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 may extract and use the information 800, 810, and 820 for decoding, according to each deeper coding unit.

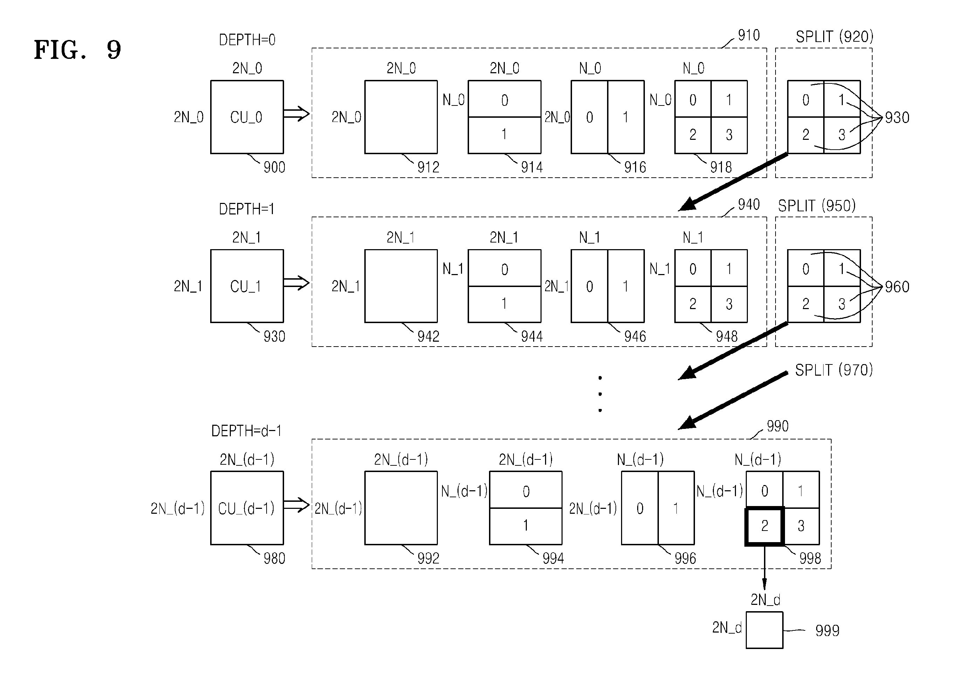

FIG. 9 is a diagram of deeper coding units according to depths, according to an embodiment of the present invention.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 9 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912 through 916 having the sizes of 2N_0x2N_0, 2N_0xN_0 and N_0x2N_0, the prediction unit 910 may not be split into a lower depth.

If the encoding error is the smallest in the partition type 918 having the size of N_0xN_0, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948 having the size of N_1 xN_1, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 having the size of N_(d-1)xN_(d-1) has the minimum encoding error, since a maximum depth is d, a coding unit CU_(d-1) having a depth of d-1 is no longer split into a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d and a minimum coding unit 980 having a lowermost depth of d-1 is no longer split to a lower depth, split information for the minimum coding unit 980 is not set.

A data unit 999 may be a 'minimum unit' for the current maximum coding unit. A minimum unit according to an embodiment of the present invention may be a square data unit obtained by splitting a minimum coding unit 980 having a lowermost coded depth by 4. By performing the encoding repeatedly, the video encoding apparatus 100 may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 0, 1, ..., d-1, d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 may extract and use the information about the coded depth and the prediction unit of the coding unit 900 to decode the partition 912. The video decoding apparatus 200 may determine a depth, in which split information is 0, as a coded depth by using split information according to depths, and use information about an encoding mode of the corresponding depth for decoding.

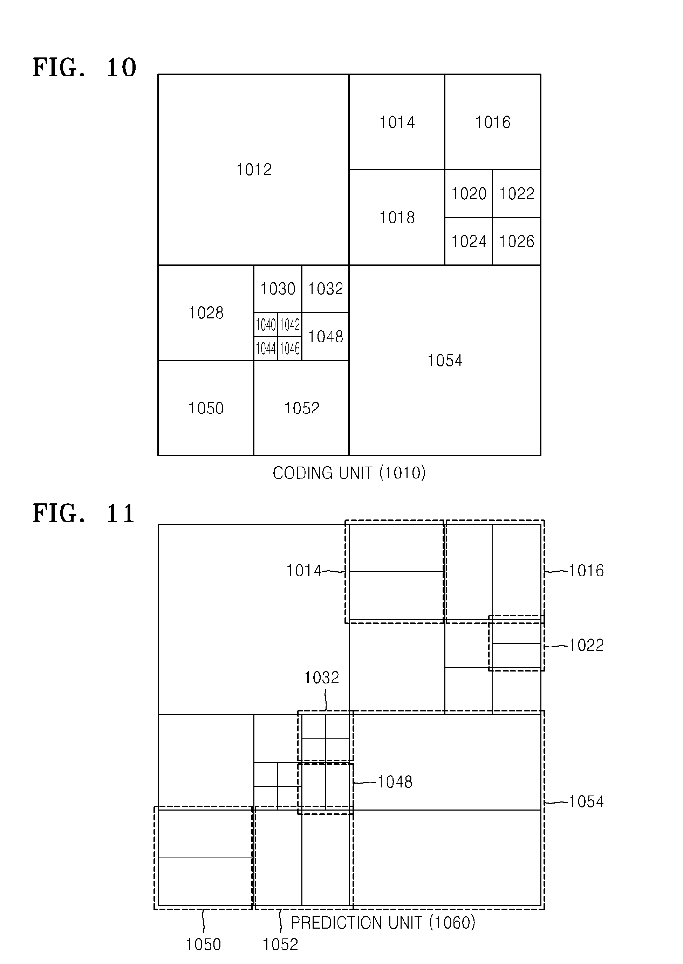

FIGS. 10, 11, and 12 are diagrams for describing a relationship between coding units 1010, prediction units 1060, and transformation units 1070, according to an embodiment of the present invention.

The coding units 1010 are deeper coding units according to depths determined by the video encoding apparatus 100, in a maximum coding unit. The prediction units 1060 are partitions of prediction units of each of the coding units 1010, and the transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoders 1014, 1016, 1022, 1032, 1048, 1050, 1052, and 1054 are obtained by splitting the coding units in the encoders 1010. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding and decoding apparatuses 100 and 200.

[Table 1]

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | Repeatedly Encode Coding Units having Lower Depth of d+1 |
| Intra Inter Skip (Only 2Nx2N) | Symmetrical Partition Type | Asymmetrical Partition Type | Split Information 0 of Transformation Unit | Split Information 1 of Transformation Unit | |
| | 2Nx2N 2NxN Nx2N NxN | 2NxnU 2NxnD nLx2N nRx2N | 2Nx2N | NxN (Symmetrical Partition Type) N/2xN/2 (Asymmetrical Partition Type) | |

The output unit 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1.

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure may be assigned to at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

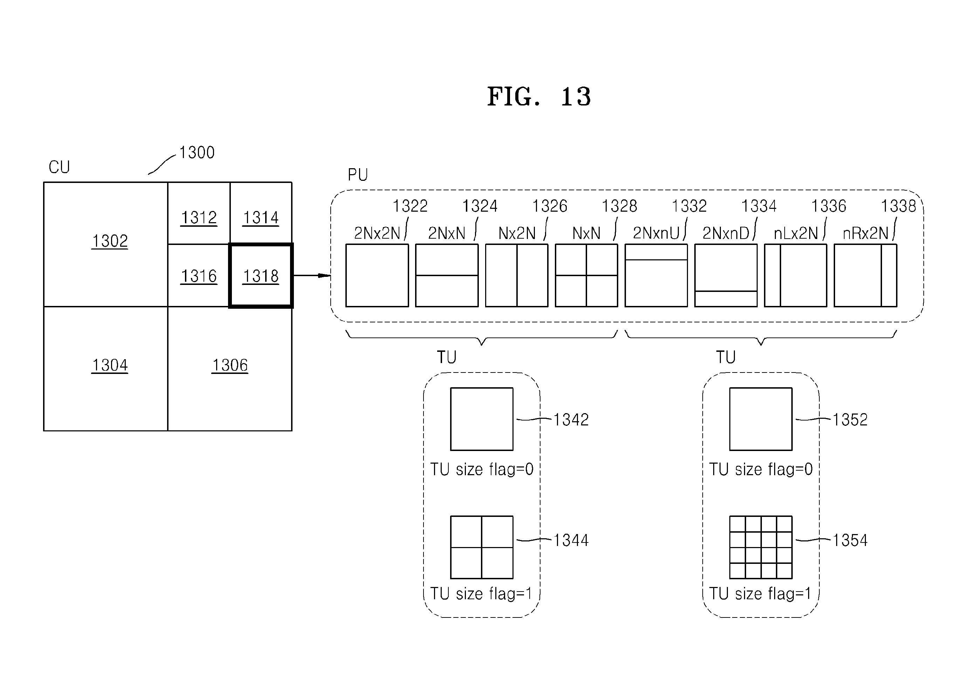

FIG. 13 is a diagram for describing a relationship between a coding unit, a prediction unit, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Split information (TU size flag) of a transformation unit is a type of a transformation index. The size of the transformation unit corresponding to the transformation index may be changed according to a prediction unit type or partition type of the coding unit.

For example, when the partition type is set to be symmetrical, i.e. the partition type 1322, 1324, 1326, or 1328, a transformation unit 1342 having a size of 2Nx2N is set if a TU size flag of a transformation unit is 0, and a transformation unit 1344 having a size of NxN is set if a TU size flag is 1.

When the partition type is set to be asymmetrical, i.e., the partition type 1332 having the size of 2NxnU, the partition type 1334 having the size of 2NxnD, the partition type 1336 having the size of nLx2N, or the partition type 1338 having the size of nRx2N, a transformation unit 1352 having a size of 2Nx2N is set if a TU size flag is 0, and a transformation unit 1354 having a size of N/2xN/2 is set if a TU size flag is 1.

Referring to FIG. 13, the TU size flag is a flag having a value or 0 or 1, but the TU size flag is not limited to a flag having 1 bit, and a transformation unit may be hierarchically split having a tree structure while the TU size flag increases from 0. Split information (TU size flag) of a transformation unit may be an example of a transformation index.

In this case, the size of a transformation unit that has been actually used may be expressed by using a TU size flag of a transformation unit, according to an embodiment according to the present invention, together with a maximum size and minimum size of the transformation unit. The video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 may decode video by using the maximum transformation unit size information, the minimum transformation unit size information, and the maximum TU size flag.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize} = \max(\text{MinTransformSize}, \text{RootTuSize}/(2^{\text{MaxTransformSizeIndex}})) \ldots (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment according to the present invention, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize) ......... (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) ..........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present invention is not limited thereto.

The maximum coding unit that includes coding units of the tree structure described above with reference to FIGS. 1 through 13 may be variously referred as a coding block tree, a block tree, a root block tree, a coding tree, a coding root, or a tree trunk.

Hereinafter, a multiview video inter-layer encoding technique and a multiview video inter-layer decoding technique based on coding units of a tree structure will now be described with reference to FIGS. 14 through 23.

FIG. 14 is a block diagram of a multiview video inter-layer encoding apparatus 1400, according to an embodiment of the present invention.

The multiview video inter-layer encoding apparatus 1400 includes a base layer encoder 1410, an additional layer encoder 1420, and an output unit 1430.

The inter-layer encoding apparatus 1400 classifies a multiview video into layers and then encodes the multiview video.

A single-view image may include a texture image and a depth image. The texture image may include pixel values according to YUV color components. The depth image may include a depth component of an image which is two-dimensionally expressed.

That is, a base view image may include a base view texture image and a base view depth image. A first additional view image may include a first additional view texture image and a first additional view depth image. Also, a second additional view image may include a second additional view texture image and a second additional view depth image. Hereinafter, for convenience of description, 'base view image' or 'additional view image' may indicate 'base view texture image' and/or 'base view depth image' or 'additional view texture image' and/or 'additional view depth image'.

In a same view image, a texture image and a depth image may be classified into different layers and then may be encoded. In the present embodiment, the base layer encoder 1410 encodes a base layer image among images that are classified into layers. A texture image and a depth image of the base view image may be classified into different layers. One of the base view texture image and the base view depth image may be encoded as the base layer image. The other image may be encoded as the additional layer image.

In the present embodiment, the multiview video inter-layer encoding apparatus 1400 may encode the base layer image, based on the coding units of the tree structure described above with reference to FIGS. 1 through 13. That is, the base layer encoder 1410 may split the base layer image into maximum coding units, may determine an encoding mode based on coding units in which a split is complete among coding units obtained by hierarchically splitting each of the maximum coding units, and may output encoded data.

In the present embodiment, the additional layer encoder 1420 may encode the other image of the base view texture image and the base view depth image, with reference to encoding information that is generated by encoding the base layer image that is one of the base view texture image and the base view depth image.

An encoding order of the base view texture image and the base view depth image may be changed, and an image among the base view texture image and the base view depth image which is first encoded may be selected as the base layer image. Prediction encoding may be performed on the other image, based on the encoding information of the image that is selected as a base layer.

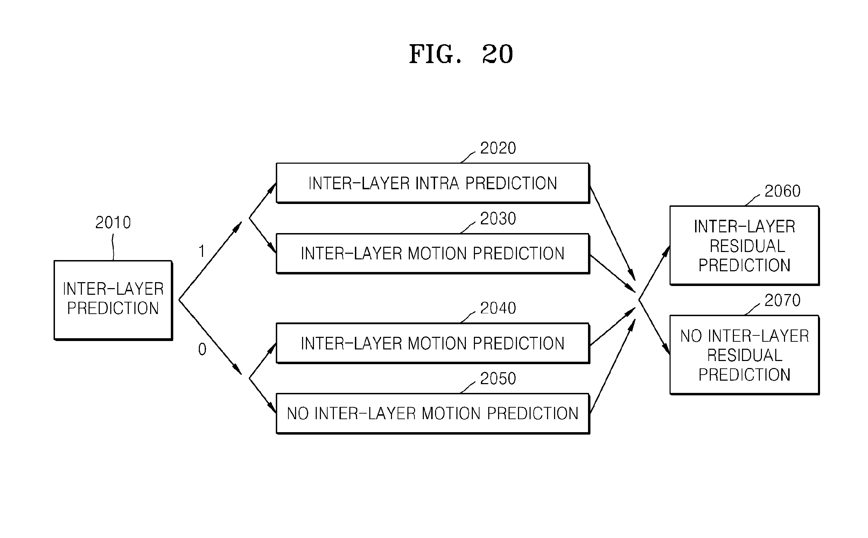

The additional layer encoder 1420 may change an image referring method according to a predetermined inter-layer encoding mode. The image referring method that is changed according to types of the inter-layer encoding mode will be described with reference to FIG. 20.

As described with reference to FIGS. 1 through 13, an image of a video may be spatially split so that maximum coding units are generated, and each of the maximum coding units may be split into a plurality of coding units. When it is determined whether to split each of the coding units into smaller coding units, the determination may be performed on each of the coding units, independently from an adjacent coding unit.

In the present embodiment, the additional layer encoder 1420 encodes an additional layer image among images that are classified into a plurality of layers.

The number of additional layer may be plural. The additional layer image may include the rest of images among the base view texture image and the base view depth image that are not encoded as the base layer image. The additional layer image may include a YUV texture image and a depth map image of an additional view image. One or more additional views may exist. Additional view images may be classified into different layers. In a same additional view image, a texture image and a depth image may be classified into different layers.

The additional layer encoder 1420 may output data of the encoded additional layer image, based on the coding units of the tree structure of the additional layer image. Also, the additional layer encoder 1420 may determine an inter-layer encoding mode that is information indicating whether to refer to the base view image so as to encode the additional layer image. The additional layer encoder 1420 may perform prediction encoding on the additional layer image by referring to the encoding information of the base layer image, based on the determined inter-layer encoding mode.

In the present embodiment, the additional layer encoder 1420 may encode at least one of an additional view texture image and an additional view depth image, by referring to the encoding information of the base layer image.

In the present embodiment, the additional layer encoder 1420 may encode at least one of the additional view texture image and additional view depth image by referring to encoding information of a base view depth image.

In the present embodiment, the additional layer encoder 1420 may perform prediction encoding between a texture image and a depth image having a same additional view. First, the additional layer encoder 1420 may encode one of an additional view texture image and an additional view depth image. The additional layer encoder 1420 may encode the other image of the additional view texture image and the additional view depth image by referring to encoding information that is generated by first encoding the one of the additional view texture image and the additional view depth image. In this case, an encoding order of the additional view texture image and the additional view depth image may be changed, and prediction encoding may be performed on the other one of the additional view texture image and the additional view depth image based on the encoding information of the image that is first encoded among the additional view texture image and the additional view depth image.

As described above, the additional layer encoder 1420 may change an image referring method according to a predetermined inter-layer encoding mode.

Thus, in the present embodiment, the additional layer encoder 1420 may perform prediction encoding on the other one of the additional view texture image and the additional view depth image by referring to encoding information based on the predetermined inter-layer encoding mode, wherein the encoding information is generated by encoding at least one of the base view texture image and the base view depth image, and the additional view texture image and the additional view depth image.

The output unit 1430 may output an encoding mode and a prediction value of the base layer image, according to an encoding result by the base layer encoder 1410. The output unit 1430 may output encoded data that is obtained by performing, by the base layer encoder 1410, encoding on each of the maximum coding units, based on the coding units of the tree structure.

Also, the output unit 1430 may output the inter-layer encoding mode of the additional layer image, according to an encoding result based on the inter-layer encoding mode that is determined by the additional layer encoder 1420. The output unit 1430 may selectively output the encoding information, according to a result of performing encoding on each of the maximum coding units, based on the coding units of the tree structure, wherein the encoding is performed by the additional layer encoder 1420.

The output unit 1430 may output an encoding mode and a prediction value of the base view texture image, and an encoding mode and a prediction value of the base view depth image via different layers. Similarly, the output unit 1430 may output an encoding mode and a prediction value of the additional view texture image, and the encoding mode and the prediction value of the base view depth image via different layers.

The encoding information of the base layer image that is referable for the additional layer image may be at least one of a plurality of pieces of encoded information including an encoding mode, a prediction value, syntax, and a restoration value, or the like that are determined according to an encoding result. In the present embodiment, the encoding mode may include structure information of a coding unit, and prediction information of a prediction mode. The structure information of the coding unit may include at least one of a depth of a current coding unit, and a group type of the coding units that constitute the current coding unit. The prediction information may include at least one of a partition type for intra prediction, an intra index, a partition type for inter prediction, a motion vector, a reference index, and non-zero coefficient position information (position information of a last coefficient). In the present embodiment, the prediction value may include at least one of a quantized transform coefficient, a difference value between coefficients according to the inter prediction, and residual data. The additional layer encoder 1420 may encode the additional layer image by referring to at least one of the structure information of the coding unit and structure information of a transformation unit included in the coding unit, which are included in the encoding mode of the base layer image. In the present embodiment, the structure information of the transformation unit may include at least one of a transformation depth of the current coding unit, and a transformation index.

The additional layer encoder 1420 may determine an encoding mode of the additional layer image by referring to at least one of the prediction mode, the partition type, motion information, and intra information, which are included in the encoding mode of the base layer image.

The additional layer encoder 1420 may determine the encoding mode of the additional layer image by referring to at least one of loop filtering-related information, the non-zero coefficient position information, a restored prediction value, and restored texture information, which are included in the encoding mode of the base layer image.

For example, in an intra mode, a restored prediction value of a current data unit may mean a prediction value that is determined by using a value of a neighboring data unit that is spatially adjacent to the current data unit. Also, in a case of inter prediction, the restored prediction value of the current data unit may mean a prediction value that is generated by performing motion compensation on the current data unit by using a previously-restored reference frame. In the present embodiment, a prediction value of an additional view data unit may be determined by using a restored prediction value of a base layer data unit that is positioned while corresponding to the additional view data unit in an image to which a restored base layer image is scaled. In another embodiment, the prediction value of the additional view data unit may be determined by using a value to which a restored prediction value of a base layer data unit is scaled, wherein the base layer data unit is positioned while corresponding to an additional layer data unit in the restored base layer image.

The additional layer encoder 1420 may encode the additional layer image, based on the determined encoding mode of the additional layer image.

In the present embodiment, the additional layer encoder 1420 may determine at least one of residual information and a transform coefficient of the additional layer image by referring to at least one of residual information and a transform coefficient in the encoding information of the base layer image.

In the present embodiment, the additional layer encoder 1420 may refer to the restoration value of a restored image generated by intra prediction or inter prediction, and thus may determine a restoration value of the additional layer image that is included in the encoding information of the base layer image.

Also, the additional layer encoder 1420 may determine encoding syntax elements for the additional layer image by using encoding syntax elements that are determined according to an encoding result with respect to the base layer image.

As described above, the additional layer encoder 1420 may encode the additional layer image, based on the encoding information of the additional layer image which is determined by using the encoding information of the base layer image according to the inter-layer encoding mode.

In the present embodiment, the additional layer encoder 1420 may determine the inter-layer encoding mode for each of predetermined data units of the additional layer image. For example, the inter-layer encoding mode may be determined for each picture sequence. Alternatively, the inter-layer encoding mode may be determined for each of tiles. Alternatively, the inter-layer encoding mode may be determined for each maximum coding unit. Alternatively, the inter-layer encoding mode may be determined for each coding unit. Alternatively, the inter-layer encoding mode may be determined for each of predetermined groups of the coding unit.

That is, the additional layer encoder 1420 may or may not perform inter-layer prediction on each data unit, depending on a corresponding inter-layer encoding mode.

In the present embodiment, the output unit 1430 may output the prediction value and the encoding mode of the base layer image.

In the present embodiment, the output unit 1430 may output different information for the additional layer image, according to types of the inter-layer encoding modes.

For example, according to the first inter-layer encoding mode, the additional layer encoder 1420 may infer or predict encoding information of the additional layer image from the encoding information of the base layer image, according to a first inter-layer encoding mode of the additional layer image. Alternatively, the additional layer encoder 1420 may infer or predict a part of the encoding information of the additional layer image from the encoding information of the base layer image.

In this case, the output unit 1430 may output the rest of the encoding information of the additional layer image, except for the information that is inferred from the base layer image, according to the first inter-layer encoding mode. Then, a receiving end may use the received encoding information of the additional layer image in a way that the encoding information is directly received, and may infer or predict the encoding mode of the additional layer image that is not transmitted, by referring to the encoding information of the base layer image.

In another embodiment, the additional layer encoder 1420 may infer or predict encoding information of the additional layer image from the encoding information of the base layer image, according to a second inter-layer encoding mode of the additional layer image.

In this case, according to the second inter-layer encoding mode, the output unit 1430 may output only the inter-layer encoding mode of the additional layer image, and may not transmit the encoding information of the additional layer image. Then, the receiving end may infer or predict the encoding information of the additional layer image from the encoding information of the base layer image which includes at least one of the encoding mode, the prediction value, the syntax, and the restoration value.

In the present embodiment, the additional layer encoder 1420 may determine a data unit of the base layer image to be referred to by a data unit of an additional layer, based on the determined inter-layer encoding mode. In other words, a base layer data unit that is mapped to a position corresponding to a position of an additional view data unit may be determined. The additional layer encoder 1420 may perform prediction encoding on the additional view image by referring to encoding information that includes at least one of an encoding mode, a prediction value, syntax, and a restoration value of the determined data unit of the base layer.

In the present embodiment, the additional layer encoder 1420 may determine a position of the data unit of the base view image which is mapped to a current data unit, by using a disparity between the current data unit of the additional view image and the base view image. Here, information about the disparity between the current data unit of the additional view image and the base view image may be encoded as the encoding information.

Also, the additional layer encoder 1420 may determine the disparity between the current data unit of the additional view image and the base view image, by using a base view depth image or information about a disparity or a depth which is previously used by a neighboring data unit of the additional view image. In this case, since the position of the data unit of the base view image, which is mapped to a current data unit, may be determined by using a disparity of the current data unit by using the information about the disparity or the depth of the current data unit, information about the disparity of the current data unit may not be separately encoded.

As described above with reference to FIGS.1 through 13, a data unit of each of the base layer image and the additional layer image may include at least one of a maximum coding unit, a coding unit, and a prediction unit, a transformation unit, and a minimum unit that are included in the coding unit.

In the present embodiment, the additional layer encoder 1420 may determine the data unit of the base layer image which is the same type that corresponds to the current data unit of the additional layer image. For example, the maximum coding unit of the additional layer image may be referred to the maximum coding unit of the base layer image. The coding unit of the additional layer image may refer to the coding unit of the base layer image.

Also, the additional layer encoder 1420 may determine a data unit group of the base layer image which is the same group type that corresponds to a current data unit group of the additional layer image. For example, a group of coding units of the additional layer image may be referred to a group of coding units of the base layer image. A group of transformation units of the additional layer image may be referred to a group of transformation units of the base layer image. The current data unit group of the additional layer image may be encoded by using referable encoding information of the data unit group of the base layer image.

The additional layer encoder 1420 may perform inter-layer encoding on a slice or tiles that are a data unit of an image. For example, the additional layer encoder 1420 may encode a current slice of the additional layer image by referring to encoding information of a slice of the base layer image which includes a position that corresponds to the current slice of the additional layer image. Alternatively, the additional layer encoder 1420 may encode a current tile of the additional layer image by referring to information about a tile of the base layer image which includes a position that corresponds to the current tile of the additional layer image.

In order to determine the data unit of the base layer image, which corresponds to the current data unit of the additional layer image, the additional layer encoder 1420 may compare samples between upper/base layer images, according to sample accuracy at a sub-pixel level. For example, the additional layer encoder 1420 may search for a sample position in an accuracy of a sample position at a 1/12 pixel level, wherein the sample position is of the base layer image that corresponds to the additional layer image. In a case of 2x upsampling between lower/additional layer images, sample accuracy is required in an accuracy of sub-pixel levels of a 1/4 pixel position and a 3/4 pixel position. In a case of 3/2x upsampling (between the lower/additional layer images), sample accuracy is required in an accuracy of sub-pixel levels of a 1/3 pixel position and a 2/3 pixel position.

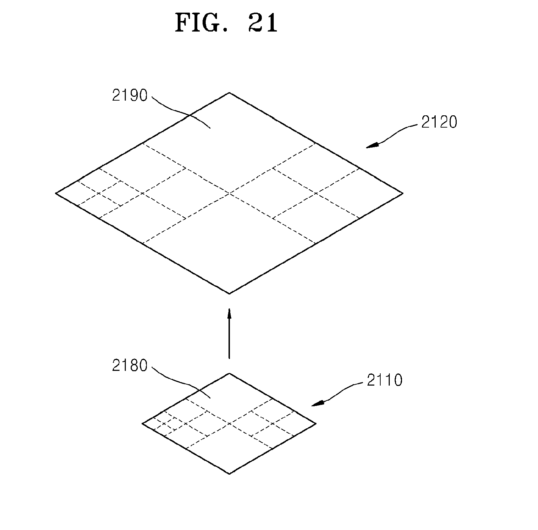

An embodiment related to mapping data units between the base layer image and the additional layer image will be described in detail with reference to FIG. 21.

The additional layer encoder 1420 may determine a data unit among the data unit group of the base layer image, wherein the data unit corresponds to the current data unit of the additional layer image but is different in terms of a type of the current data unit group. For example, the coding unit of the additional layer image may be referred to the maximum coding unit of the base layer image. The prediction unit of the additional layer image may be referred to the coding unit of the base layer image. The additional layer encoder 1420 may encode the current data unit group of the additional layer image by referring to encoding information of a different-type data unit group of the base layer image.

When an inter-layer prediction mode is determined for the current data unit of the additional layer image, the additional layer encoder 1420 may perform inter-layer prediction on some of lower data units included in the current data unit, by performing prediction encoding with reference to the base layer image, and may perform prediction encoding on the rest of the lower data units in same layer as the additional layer image.

The additional layer encoder 1420 may adjust encoding information that is inferred from the base layer image, and may determine encoding information of the additional layer image by referring to the adjusted encoding information. The additional layer image may be restored by using the determined encoding information of the additional layer image. Refinement information for finely adjusting the encoding information that is inferred from the base layer image may also be encoded.

Thus, the inter-layer encoding apparatus 1400 may encode the base view texture image, the base view depth image, the additional view texture image, and the additional view depth image in different layers, respectively, and may transmit encoding information.

In the present embodiment, the multiview video inter-layer encoding apparatus 1400 performs encoding, based on the coding units of the tree structure, and thus may be related to the video encoding apparatus 100 in the one or more embodiments.

For example, the base layer encoder 1410 of the multiview video inter-layer encoding apparatus 1400 may encode the base layer image, based on the coding units of the tree structure, according to operations by the maximum coding unit splitter 110, the coding unit determiner 120, and the output unit 130 of the video encoding apparatus 100. The coding unit determiner 120 may determine the encoding mode of the data unit such as the coding unit, the prediction unit, the transformation unit, or a partition of the base layer image. Similar to an operation by the output unit 130, the output unit 1430 may output the encoding information that is determined for each data unit of the base layer image and includes the encoding mode and an encoded prediction value.

For example, the additional layer encoder 1420 may also perform encoding according to operations by the maximum coding unit splitter 110, the coding unit determiner 120, and the output unit 130. The encoding operation by the additional layer encoder 1420 may be similar to the operation by the coding unit determiner 120 but may refer to the encoding information of the base layer image so as to determine the encoding information for the additional layer image, based on the inter-layer encoding mode. Also, the output unit 1430 may perform an operation similar to the operation by the output unit 130 but may not selectively encode the encoding information of the additional layer, based on the inter-layer encoding mode. In the present embodiment, the multiview video inter-layer encoding apparatus 1400 may include a central processor (not shown) that generally controls the base layer encoder 1410, the additional layer encoder 1420, and the output unit 1430. Alternatively, the base layer encoder 1410, the additional layer encoder 1420, and the output unit 1430 may operate using their own processors (not shown), respectively, and since the processors interoperate with each other, the multiview video inter-layer encoding apparatus 1400 may operate, accordingly. Alternatively, according to control by an external processor (not shown) of the multiview video inter-layer encoding apparatus 1400, the base layer encoder 1410, the additional layer encoder 1420, and the output unit 1430 may be controlled.

In the present embodiment, the multiview video inter-layer encoding apparatus 1400 may include one or more data storage units (not shown) for storing input and output data of the base layer encoder 1410, the additional layer encoder 1420, and the output unit 1430. The video encoding apparatus 100 may include a memory control unit (not shown) that controls data input and output of the one or more data storage units.

In the present embodiment, the multiview video inter-layer encoding apparatus 1400 may interoperate with an internal video encoding processor that is internally embedded or an external video encoding processor so as to output a video encoding result, so that the multiview video inter-layer encoding apparatus 1400 may perform a video encoding operation including transformation. The internal video encoding processor of the multiview video inter-layer encoding apparatus 1400 may correspond to not only a separate processor but also may correspond to a case in which a central processing unit or a graphical operational unit of the multiview video inter-layer encoding apparatus 1400 includes a video encoding processing module and thus performs a basic video encoding operation.

FIG. 15 is a block diagram of a multiview video inter-layer decoding apparatus 1500, according to an embodiment of the present invention.

In the present embodiment, the inter-layer decoding apparatus 1500 includes a parser 1510, a base layer decoder 1520, and an additional layer decoder 1530.

The multiview video inter-layer decoding apparatus 1500 may receive a bitstream that includes encoded data of a video. The parser 1510 may parse encoding information of a base layer image, and an inter-layer encoding mode of an additional layer image from the received bitstream.

In the present embodiment, the inter-layer decoding apparatus 1500 may receive bitstreams of a texture image and a depth image of a base view image and a texture image and a depth image of an additional view image as separate layers, respectively. Bitstreams of texture images of different additional view images may be received as different layers, and bitstreams of depth images of the different additional view images may be received as different layers. The parser 1510 may extract encoding information from a bitstream for each of the layers.

The base layer decoder 1520 may decode the base layer image by using the parsed encoding information of the base layer image. The base layer image may be one of a base view texture image and a base view depth image. When the multiview video inter-layer decoding apparatus 1500 decodes the video, based on coding units of a tree structure, the base layer decoder 1520 may perform decoding on each maximum coding unit of the base layer image, based on the coding units of the tree structure.

In the present embodiment, the base layer decoder 1520 may decode the base layer image from the encoding information of the base layer image that is parsed from a base layer bitstream. In the present embodiment, the base layer decoder 1520 may decode one of the base view texture image and the base view depth image from the encoding information that is parsed from the base layer bitstream.

In the present embodiment, the base layer bitstream may be a bitstream of one of the base view texture image and the base view depth image.

For example, the base layer decoder 1520 may receive only a bitstream including encoding information of the base view texture image. The base layer decoder 1520 may first decode the base view texture image by using the encoding information of the base view texture image that is parsed from the received bitstream. In this case, the base view depth image may be restored from an additional layer bitstream.

Conversely, when the base layer decoder 1520 receives only a bitstream including encoding information of the base view depth image, only the base view depth image may be restored. In this case, the base view texture image may be restored from an additional layer bitstream.

In the present embodiment, the additional layer decoder 1530 may decode an additional layer image by using the encoding information of the base layer image that is decoded by the base layer decoder 1520.

The other image of the base view texture image and the base view depth image, which is not the base layer image, and an additional view texture image and an additional view depth image may be received as separate additional layer bitstreams, respectively.

The additional layer decoder 1530 may decode the rest of the base view image by referring to the base layer image or the parsed encoding information or the parsed encoding mode of the base layer image that is first decoded. According to a type of the inter-layer encoding mode, a method of decoding the other image by referring to a first decoded image or parsed encoding information may vary.

The additional layer decoder 1530 may perform prediction decoding on the additional layer image according to the parsed inter-layer encoding mode of the additional layer image, by referring to the encoding mode of the base layer image, i.e., the encoding information. Similarly, the additional layer decoder 1530 may perform decoding on each maximum coding unit of the additional layer image, based on the coding units of the tree structure.

In the present embodiment, the additional layer decoder 1530 may decode at least one of an additional view texture image and an additional view depth image by referring to the encoding information of the base view texture image. Also, the additional layer decoder 1530 may decode at least one of the additional view texture image and the additional view depth image by referring to the encoding information of the base view depth image.

Alternatively, the additional layer decoder 1530 may decode the additional view depth image by referring to the additional view texture image that is decoded first, or encoding information of the additional view texture image. Conversely, the additional layer decoder 1530 may decode the additional view texture image by referring to the additional view depth image that is decoded first, or encoding information of the additional view depth image.

That is, in the present embodiment, the additional layer decoder 1530 may decode the other image of the additional view texture image and the additional view depth image according to the predetermined inter-layer encoding mode, by referring to at least one of a plurality of pieces of encoding information of the base view texture image, the base view depth image, the additional view texture image, and the additional view depth image.

For example, the additional layer decoder 1530 may determine an encoding mode of the additional layer image by referring to at least one of structure information of a coding unit and structure information of a transformation unit included in the coding unit that are in the encoding mode of the base layer image.

For example, the additional layer decoder 1530 may determine the encoding mode of the additional layer image by referring to at least one of prediction mode information, partition type information, motion information, and intra information of the encoding mode of the base layer image.

For example, the additional layer decoder 1530 may determine the encoding mode of the additional layer image by referring to at least one of loop filtering-related information, non-zero coefficient position information, restored prediction information, and restored texture information in the encoding mode of the base layer image.

The additional layer decoder 1530 may decode the additional layer image based on the encoding mode of the additional layer image that is determined by referring to the encoding mode of the base layer image.

For example, the additional layer decoder 1530 may determine a prediction value of the additional layer image by referring to at least one of residual information, coefficient information, and a restored prediction value in the encoding mode of the base layer image. The additional layer decoder 1530 may decode the additional layer image, based on the determined prediction value of the additional layer image.

The parser 1510 may parse the rest of information as the encoding mode of the additional layer image, based on a first inter-layer encoding mode, except for information that is inferred from the encoding mode of the base layer image. In this case, the additional layer decoder 1530 may infer or predict unparsed information about the encoding mode of the additional layer image from the encoding mode of the base layer image.

Alternatively, the parser 1510 may parse, as the prediction value of the additional layer image, the rest of information except for information that is inferred from the prediction value of the base layer image, according to the first inter-layer encoding mode. In this case, the additional layer decoder 1530 may infer or predict unparsed information about the prediction value of the additional layer image from the perdition value of the base layer image.

The parser 1510 may parse only inter-layer encoding mode information indicating that the additional layer image is based on a second inter-layer encoding mode. In this case, the additional layer decoder 1530 may infer or predict the encoding information of the additional layer image from the encoding information of the base layer image.

Also, the additional layer decoder 1530 may determine a data unit of the base layer image that is to be referred to by a data unit of the additional layer image, according to the inter-layer encoding mode of the additional layer image that is parsed from the bitstream. That is, the data unit of the base layer image that is mapped to a position corresponding to a position of the data unit of the additional layer image may be determined. The additional layer decoder 1530 may perform prediction decoding on the additional layer image by referring to encoding information of the determined data unit of the base layer image. The additional layer image may be prediction decoded based on the coding units of the tree structure.

In the present embodiment, the additional layer decoder 1530 may determine a data unit of the base layer image that is to be referred to by a current data unit of an additional view image, by using change information about a disparity between the current data unit of the additional view image and the base view image. When the parser 1510 first parses the disparity information between the current data unit of the additional view image and the base view image, a position of the data unit of the base view image that is to be referred to by the current data unit of the additional view image may be determined by using the parsed change information.

In the present embodiment, the additional layer decoder 1530 may determine the disparity information between the current data unit of the additional view image and the base view image by using change information or depth information that is previously used in a neighboring data unit of the base view depth image or the additional view image. By using the determined change information, the position of the data unit of the base view image that is mapped to the current data unit may be determined. When the disparity information between the current data unit of the additional view image and the base view image is not first parsed, the position of the data unit of the base view image may be determined with reference to change information or depth information that is previously used in decoding another data unit.

The additional layer decoder 1530 may search for a position of a sample of the base layer image that corresponds to a sample of the additional layer image, according to sample accuracy at a sub-pixel level, so as to determine the data unit of the base layer image that corresponds to the current data unit of the additional layer image.

The additional layer decoder 1530 may determine the data unit of the base layer image that is the same type corresponding to the current data unit of the additional layer image. The additional layer decoder 1530 may determine encoding information of the current data unit of the additional layer image by referring to encoding information of the determined data unit of the base layer image, and may decode the current data unit by using the determined encoding information of the current data unit.

The additional layer decoder 1530 may determine a data unit group of the base layer image that is the same group type corresponding to a current data unit group of the additional layer image. The additional layer decoder 1530 may determine encoding information of the current data unit group of the additional layer image by referring to encoding information of the determined data unit group of the base layer image, and may decode the current data unit group by using the encoding information of the current data unit group.

The additional layer decoder 1530 may determine at least one of current slice information and tile information of the additional layer image by referring to at least one of current slice information and tile information of the base layer image.

Also, the additional layer decoder 1530 may determine a different-type data unit of the base layer image that corresponds to the current data unit of the additional layer image, and then may determine encoding information of the current data unit of the additional layer image by referring to encoding information of the data unit of the base layer image. For example, the additional layer decoder 1530 may determine encoding information of a current maximum coding unit of the additional layer image by wholly using encoding information of a predetermined coding unit of the base layer image.

Also, the additional layer decoder 1530 may determine a different-type data unit group of the base layer image that corresponds to the current data unit group of the additional layer image, and then may determine encoding information of the current data unit group of the additional layer image by referring to encoding information of the data unit group of the base layer image. For example, the additional layer decoder 1530 may determine encoding information of a current maximum coding unit group of the additional layer image by wholly using encoding information of a predetermined coding unit group of the base layer image.

When an inter-layer prediction mode is determined for the current data unit of the additional layer image, the additional layer decoder 1530 may decode some of lower data units included in the current data unit, by referring to the base layer image, and may decode the rest of the lower data units in a same layer as the additional layer image.

The additional layer decoder 1530 may modify encoding information that is inferred from the base layer image, and then may determine encoding information of the additional layer image by referring to the modified encoding information. The additional layer decoder 1530 may restore the additional layer image by using the determined encoding information of the additional layer image. The parser 1510 may parse refinement information, and the additional layer decoder 1530 may modify the encoding information that is inferred from the base layer image, based on the parsed refinement information.

Thus, the inter-layer decoding apparatus 1500 may separately restore the base view texture image, the base view depth image, the additional view texture image, and the additional view depth image via different layers, respectively.

In the present embodiment, the multiview video inter-layer decoding apparatus 1500 performs decoding based on the coding units of the tree structure and thus may be related to the video decoding apparatus 200 in the one or more embodiments.

For example, the parser 1510 of the multiview video inter-layer decoding apparatus 1500 may receive a bitstream according to operations of the receiver 210 of the video decoding apparatus 200, and then may parse the encoding information about the base layer image and the encoding information about the additional layer image according to operations of the image data and encoding information extractor 220 of the video decoding apparatus 200. The parser 1510 may parse the encoding information with respect to the data unit such as the coding unit, the prediction unit, the transformation unit, or the partition of the base layer image. Here, the parser 1510 may selectively not parse the encoding information about the additional layer image, based on the inter-layer prediction mode.

For example, similar to an operation by the image data decoder 230 of the video decoding apparatus 200, the base layer decoder 1520 may decode the base layer image based on coding units of the tree structure by using the parsed encoding information.

Similar to the operation by the image data decoder 230 of the video decoding apparatus 200, the additional layer decoder 1530 may decode the additional layer image based on the coding units of the tree structure by using the parsed encoding information. Here, the additional layer decoder 1530 may determine the encoding information for the additional layer image by referring to the encoding information of the base layer image, according to the inter-layer encoding mode, and then may perform decoding.

In the present embodiment, the multiview video inter-layer decoding apparatus 1500 may include a central processor (not shown) that generally controls the parser 1510, the base layer decoder 1520, and the additional layer decoder 1530. Alternatively, the parser 1510, the base layer decoder 1520, and the additional layer decoder 1530 may operate by using their own processors (not shown), respectively, and since the processors interoperate with each other, the multiview video inter-layer decoding apparatus 1500 may operate, accordingly. Alternatively, according to control by an external processor (not shown) of the multiview video inter-layer decoding apparatus 1500, the parser 1510, the base layer decoder 1520, and the additional layer decoder 15300 may be controlled.

In the present embodiment, the multiview video inter-layer decoding apparatus 1500 may include one or more data storage units (not shown) for storing input and output data of the parser 1510, the base layer decoder 1520, and the additional layer decoder 1530. The multiview video inter-layer decoding apparatus 1500 may include a memory control unit (not shown) that controls data input and output of the one or more data storage units.

In the present embodiment, in order to restore a video by decoding the video, the multiview video inter-layer decoding apparatus 1500 may interoperate with an internal video decoding processor that is internally embedded, or an external video decoding processor, so that the multiview video inter-layer decoding apparatus 1500 may perform a video decoding operation including inverse-transformation. The internal video decoding processor of the multiview video inter-layer decoding apparatus 1500 may correspond to not only a separate processor but also may correspond to a case in which a central processing unit or a graphical operational unit of the multiview video inter-layer decoding apparatus 1500 includes a video encoding processing module and thus performs a basic video encoding operation.

In the present embodiment, the multiview video inter-layer encoding apparatus 1400 and the multiview video inter-layer decoding apparatus 1500 may separately determine an inter-layer prediction method for every sequence, slice, or picture. For example, an inter-layer prediction method for a first picture (or a sequence or a slice), and an inter-layer prediction method for a second picture may be separately determined.

Also, in inferred inter-later prediction, encoding information of an additional layer data unit may be predicted by referring to at least two pieces of encoding information of a base layer data unit. That is, the at least two pieces of encoding information to be referred to are already determined. For example, a plurality of pieces of encoding information which are determined for the base layer data unit are wholly used, so that a plurality of pieces of encoding information for the additional layer data unit may be determined. When the multiview video inter-layer encoding apparatus 1400 performs the inferred inter-later prediction on the additional layer data unit, the multiview video inter-layer decoding apparatus 1500 may also determine a base layer data unit that corresponds to an additional view image and may determine a plurality of pieces of encoding information of an additional view data unit by wholly using a plurality of pieces of encoding information of the base layer data unit.

Also, for inter-layer prediction, the encoding information of the base layer data unit may be modified or may be used decreased and then may be used. For one example, in order to predict a motion vector of the additional view data unit, a motion vector of a base layer partition may be downwardly modified to accuracy of a particular pixel level such as an integer pixel level or a sub-pixel level of a 1/2 pixel level, and then may be used. For another example, motion vectors of a plurality of base layer partitions may be merged into one vector and then may be used as a motion vector of an additional view partition.

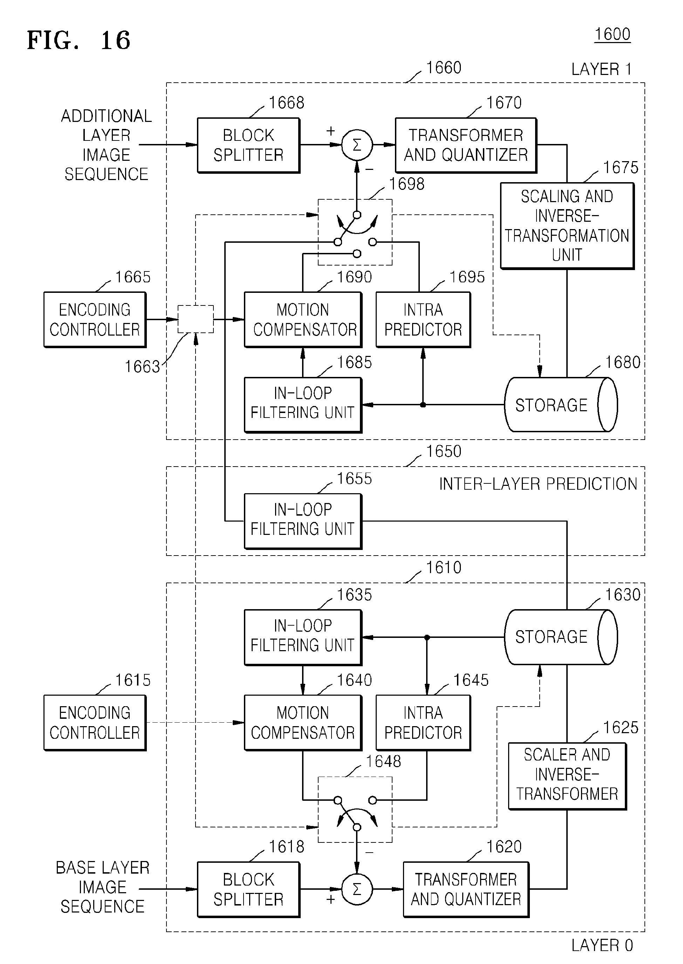

Hereinafter, with reference to FIGS. 16 through 22, inter-layer prediction methods by the inter-layer encoding apparatus 1400 and the inter-layer decoding apparatus 1500 are described in detail.

FIG. 16 is a block diagram of an inter-layer encoding system 1600, according to an embodiment of the present invention.

The inter-layer encoding system 1600 includes a base layer encoding end 1610, an additional layer encoding end 1660, and an inter-layer prediction end 1650 between the base layer encoding end 1610 and the additional layer encoding end 1660. The base layer encoding end 1610 and the additional layer encoding end 1660 may have detailed configurations of the base layer encoder 1410 and the additional layer encoder 1420, respectively.

An inter-layer encoding method may classify a multiview video into multilayer images according to views, a texture image, and a depth image. Hereinafter, for convenience of description, the inter-layer encoding system 1600 encodes the multiview video while the inter-layer encoding system 1600 distinctively encodes a base view texture image as a base layer image, and encodes a base view depth image, an additional view texture image, or an additional view depth image as an additional layer image.

The base layer encoding end 1610 receives a base layer image sequence and encodes every image. The additional layer encoding end 1660 receives an additional layer image sequence and encodes every image. Operations that overlap with each other among operations by the base layer encoding end 1610 and the additional layer encoding end 1660 are simultaneously described.

An input image (a low-resolution image or a high-resolution image) is split into a maximum coding unit, a coding unit, a prediction unit, or a transformation unit via a block splitter 1618 or 1668. In order to encode the coding unit output from the block splitter 1618 or 1668, intra prediction or inter prediction may be performed on each of prediction units of the coding unit. According to whether a prediction switch 1648 or 1698 indicates a prediction mode of the prediction unit as an intra prediction mode or an inter prediction mode, inter prediction may be performed by referring to a previous restored image output from a motion compensator 1640 or 1690, or intra prediction may be performed by using a neighboring prediction unit of a current prediction unit in a current input image output from an intra predictor 1645 or 1695. Residual information for each of the prediction units may be generated via the inter prediction.

According to each prediction unit, the residual information about each prediction unit and an adjacent image is input to a transformer and quantizer 1620 or 1670. The transformer and quantizer 1620 or 1670 may output a quantized transform coefficient by performing transformation and quantization on each of transformation units, based on the transformation units of the coding unit.

A scaler and inverse-transformer 1625 or 1675 may perform scaling and inverse-transformation on the quantized transform coefficient according to each of the transformation units of the coding unit, and thus may generate residual information about a spatial domain. When the inter mode is indicated by control of the prediction switch 1648 or 1698, the residual information is combined with the previous restored image or the neighboring prediction unit, so that a restored image including the current prediction unit may be generated, and a current restored image may be stored in a storage 1630 or 1680. The current restored image may be transferred to the intra predictor 1645 or 1695 and the intra predictor 1645 or 1695 according to a prediction mode of a prediction unit to be encoded next time.

In the inter mode, an in-loop filtering unit 1635 or 1685 may perform at least one filtering among deblocking filtering, Sample Adaptive Offset (SAO) filtering, and Adaptive Loop Filtering (ALF) filtering on a restored image stored in the storage 1630 or 1680, according to each of coding units. At least one of the deblocking filtering, the SAO filtering, and the ALF filtering may be performed on the coding unit and at least one of a prediction unit and a transformation unit that are included in the coding unit.

The deblocking filtering is filtering for lessening a blocking phenomenon of a data unit, the SAO filtering is filtering for compensating for a pixel value that is changed due to data encoding and decoding, and the ALF filtering is filtering for minimizing an error (i.e., a mean squared error (MSE)) between the restored image and an original image. Data that is filtered by the in-loop filtering unit 1635 or 1685 may be transferred to the motion compensator 1640 or 1690 according to each of the prediction units. In order to encode a next target coding unit that is output from the block splitter 1618 or 1668, residual information about the next target coding unit and the current restored image that is output from the motion compensator 1640 or 1690 and the block splitter 1618 or 1668 may be generated.

In this manner, the aforementioned encoding operations may be repeated on each of the coding units of the input image.

For the inter-layer prediction, the additional layer encoding end 1660 may refer to the restored image in the storage 1630 of the base layer encoding end 1610. An encoding controller 1615 of the base layer encoding end 1610 may transfer the restored image of the base layer encoding end 1610 to the additional layer encoding end 1660 by controlling the storage 1630 of the base layer encoding end 1610. In the inter-layer prediction end 1650, an in-loop filtering unit 1655 may perform at least one of the deblocking filtering, the SAO filtering, and the ALF filtering on a restored base layer image that is output from the storage 1630 of the base layer encoding end 1610. When the base layer and the additional layer have different resolutions, the inter-layer prediction end 1650 may perform upsampling on the restored image of the base layer and may deliver the upsampled restored image to the additional layer encoding end 1660. When the inter-layer prediction is performed by control of the switch 1698 of the additional layer encoding end 1660, inter-layer prediction may be performed on an additional layer image by referring to the restored base layer image that is delivered by the inter-layer prediction end 1650.

For image encoding, various encoding modes for the coding unit, the prediction unit, and the transformation unit may be set. For example, a depth or split information (e.g., a split flag) may be set as the encoding mode for the coding unit. A prediction mode, a partition type, intra direction information, or reference list information may be set as the encoding mode for the prediction unit. A transformation depth or split information may be set as the encoding mode of the transformation unit.

The base layer encoding end 1610 may perform encoding by applying each of various depths for the coding unit, each of various prediction modes for the prediction unit, each of various partition types, each of various intra directions, each of various reference lists, and each of various transformation depths for the transformation unit, and then may determine a coded depth, a prediction mode, a partition type, intra direction/reference list, a transformation depth, or the like which achieve highest encoding efficiency, according to a result of the encoding. Examples of an encoding mode that is determined by the base layer encoding end 1610 are not limited to the aforementioned encoding modes.

The encoding controller 1615 of the base layer encoding end 1610 may control various encoding modes to be appropriately applied to operations of each element. Also, for inter-layer encoding on the multiview video by the additional layer encoding end 1660, the encoding controller 1615 may control the additional layer encoding end 1660 to determine an encoding mode or residual information by referring to the encoding result of the base layer encoding end 1610.

For example, the additional layer encoding end 1660 may wholly use an encoding mode of the base layer encoding end 1610 as an encoding mode for the additional layer image or may determine the encoding mode for the additional layer image by referring to the encoding mode of the base layer encoding end 1610.

The encoding controller 1615 of the base layer encoding end 1610 may control a control signal of an encoding controller 1665 of the additional layer encoding end 1660, so that the additional layer encoding end 1660 may use a current encoding mode from the encoding mode of the base layer encoding end 1610 so as to determine the current encoding mode.

Similar to the multiview video inter-layer encoding system 1600 according to the inter-layer prediction method shown in FIG. 16, a multiview video inter-layer decoding system according to the inter-layer prediction method may be implemented. That is, the multiview video inter-layer decoding system may receive a base layer bitstream and an additional layer bitstream. A base layer decoding end of the multiview video inter-layer decoding system may decode the base layer bitstream and thus may generate restored base layer images. An additional layer decoding end of the multiview video inter-layer decoding system may decode the additional layer bitstream by using the restored base layer images and parsed encoding information, and thus may generate restored additional layer images.

The aforementioned inter-layer prediction is related to a case where the base layer image is the base view texture image, but the base layer image may be the base view depth image.

When the base layer image is the base view texture image or the base view depth image, and the additional layer image is the additional view texture image or the additional view depth image, the inter-layer prediction may correspond to inter-view prediction between different views. However, when the base layer image is a predetermined view texture (or depth) image, and the additional layer image is a predetermined depth texture (or texture) image, the inter-layer prediction may correspond to prediction between a texture image and a depth image that have the same view.

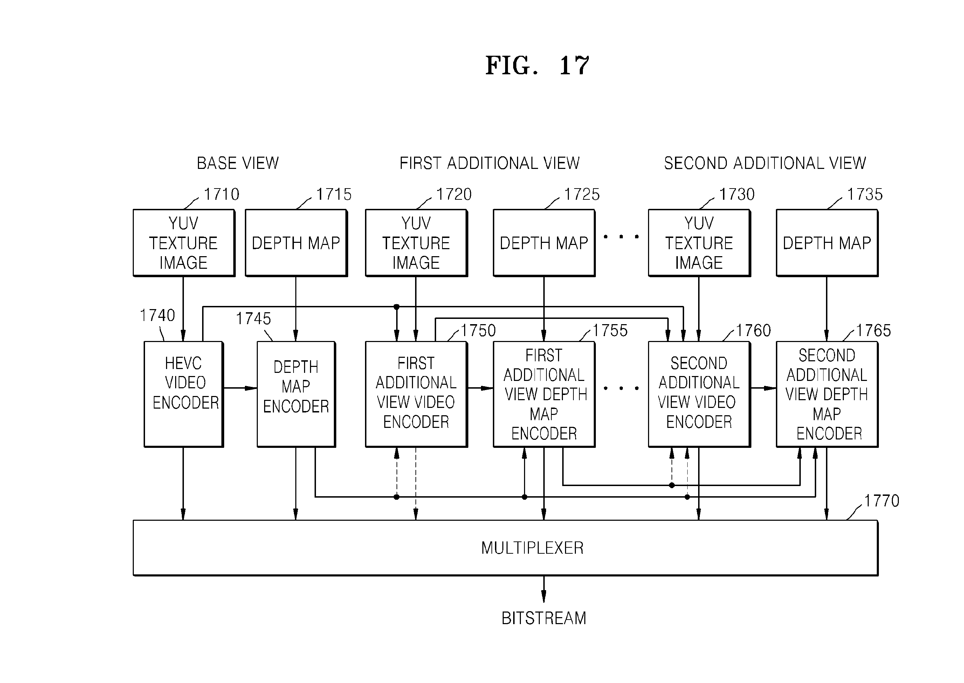

FIG. 17 illustrates an inter-layer encoding system 1700 for a multiview video, according to an embodiment of the present invention.

In the present embodiment, the inter-layer encoding system 1700 may include HEVC video encoders 1740, 1750, and 1760 and depth map encoders 1745, 1755, and 1765, according to views. A depth map indicates a type of an image where a depth component of an image is two dimensionally expressed. In the present embodiment, each of the HEVC video encoders 1740, 1750, and 1760 may encode a texture image of a color image according to a YUV color format.

A base view YUV texture image 1710 and a base view depth map 1715, a first additional view YUV texture image 1720 and a first additional view depth map 1725, and a second additional view YUV texture image 1730 and a second additional view depth map 1735 may be encoded as separate layer images, respectively.

The base view YUV texture image 1710 may be encoded by the HEVC video encoder 1740 according to HEVC standard, and the base view depth map 1715 may be encoded by the depth map encoder 1745. Referring to FIG. 17, the base view YUV texture image 1710 is encoded according to HEVC standard, however, the base view YUV texture image 1710 may be encoded according to H.264 standard.

The first additional view YUV texture image 1720 may be encoded by the first additional view video encoder 1750, and the first additional view depth map 1725 may be encoded by the depth map encoder 1755. Also, the second additional view YUV texture image 1730 may be encoded by the second additional view HEVC video encoder 1760, and the second additional view depth map 1735 may be encoded by the depth map encoder 1765.

Here, in order to encode the base view depth map 1715, the depth map encoder 1745 may refer to encoding information or a symbol that the HEVC video encoder 1740 generates by encoding the base view YUV texture image 1710.

Not only the depth map encoder 1745 for the base view depth map 1715 but also the first additional view video encoder 1750 for the first additional view YUV texture image 1720, and the second additional view video encoder 1760 for the second additional view YUV texture image 1730 may respectively encode the first and second additional view YUV texture images, according to an inter-layer prediction mode, by referring to the encoding information or the symbol that the HEVC video encoder 1740 generates by encoding the base view YUV texture image 1710.

The depth map encoders 1755 and 1765 may perform prediction encoding on the first additional view depth map 1725 and the second additional view depth map 1735, respectively, according to the inter-layer prediction mode, by referring to encoding information or a symbol that the depth map encoder 1745 for a base view depth map generates by encoding the base view depth map 1715.

According to the inter-layer prediction mode, the first additional view video encoder 1750 and the second additional view HEVC video encoder 1760 may perform prediction encoding on the first additional view YUV texture image 1720 and the second additional view YUV texture image 1730, respectively, by referring to the encoding information or the symbol that the depth map encoder 1745 generates by encoding the base view depth map 1715.

Also, in order to encode the first additional view depth map 1725, the depth map encoder 1755 may refer to encoding information or a symbol that the first additional view video encoder 1750 generates by encoding the first additional view YUV texture image 1720. The second additional view video encoder 1760 for the second additional view YUV texture image 1730 may refer to the encoding information or the symbol of the first additional view YUV texture image 1720, which is generated by the first additional view video encoder 1750.

According to an inter-layer prediction mode, the depth map encoder 1765 may perform prediction encoding on the second additional view depth map 1735 by referring to encoding information or a symbol that the depth map encoder 1755 for a first additional view depth map generates by encoding the first additional view depth map 1725. According to a particular inter-layer prediction mode, in order to encode the second additional view YUV texture image 1730, the second additional view video encoder 1760 may refer to the encoding information or the symbol of the first additional view depth map 1725, which is generated by the depth map encoder 1755.

Thus, when texture images according to views and depth maps according to the views are encoded as separate layers, a current layer image may be prediction encoded with reference to encoding information or a symbol that is generated from another first-encoded layer image.

Encoding results by the HEVC video encoder 1740 and the depth map encoder 1745 for base view images, the first additional view video encoder 1750 and the depth map encoder 1755 for first additional view images, and the second additional view video encoder 1760 and the depth map encoder 1765 for second additional view images, may be multiplexed by a multiplexer 1770 and thus may be output as one bitstream.

In another embodiment, the inter-layer encoding system 1700 may output bitstreams according to layers from the HEVC video encoder 1740, the depth map encoder 1745, the first additional view video encoder 1750, the depth map encoder 1755, the second additional view video encoder 1760, and the depth map encoder 1765, respectively, by outputting a plurality of pieces of encoding information or symbols according to the layers, respectively.

Thus, YUV texture images and depth maps that are split from the multiview video may be simultaneously encoded via the inter-layer encoding system 1700 for a multiview video.

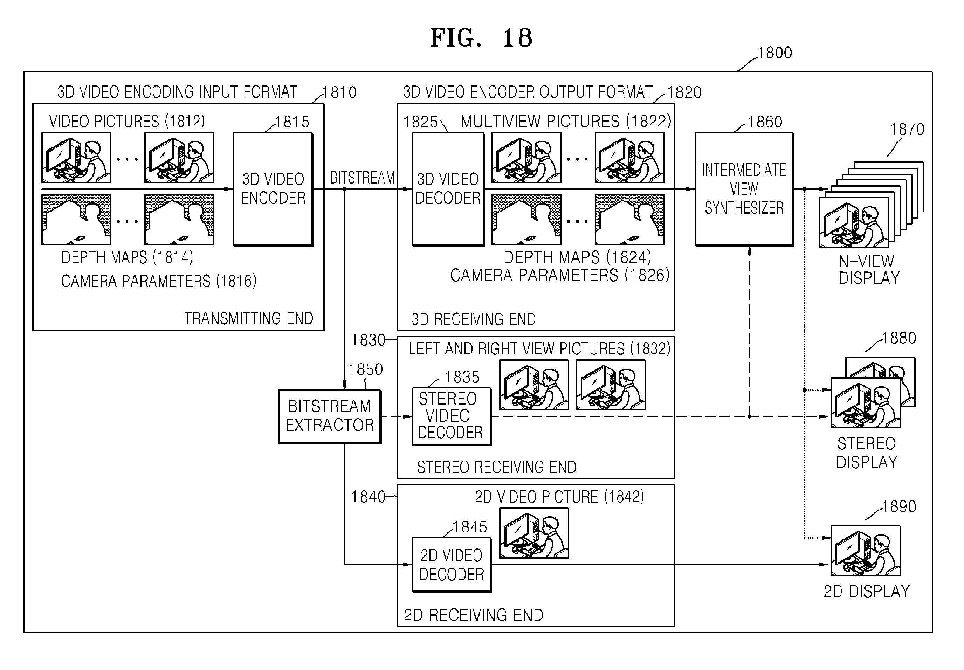

FIG. 18 illustrates a transmitting and receiving system 1800 for a multiview video service, according to an embodiment of the present invention.

A transmitting end 1810 of the transmitting and receiving system 1800 for the multiview video service may encode and transmit the multiview video for a 3D video service. In particular, multiview video pictures 1812 may be encoded with depth maps 1814 or camera parameters 1816 as a 3D video encoding input format. A 3D video encoder 1815 may perform inter-view prediction on the video pictures 1812 according to an inter-view prediction mode, or may perform prediction between the video pictures 1812 and the depth maps 1814. The 3D video encoder 1815 may transmit a bitstream including encoding information about a 3D video.

According to reproduction capability of each of receiving ends 1820, 1830, and 1840 in the transmitting and receiving system 1800, a reproducible image format may be selected from bitstreams and then may be decoded.

That is, the 2D receiving end 1840 may select, receive, and decode a 2D bitstream, the stereo receiving end 1830 may select, receive, and decode a stereo bitstream, and the 3D receiving end 1820 may select, receive, and decode a 3D bitstream.

When a bitstream extractor 1850 extracts only a 2D image bitstream from bitstreams transmitted by the transmitting end 1810, the 2D receiving end 1840 may receive the 2D image bitstream, and a 2D video decoder 1845 may decode the 2D image bitstream and thus may restore a 2D video picture 1842. The 2D video picture 1842 may be two dimensionally reproduced by a 2D display device 1890.

When the bitstream extractor 1850 extracts only a stereo image bitstream from the bitstreams transmitted by the transmitting end 1810, the stereo receiving end 1830 may receive the stereo image bitstream, and a stereo video decoder 1835 may decode the stereo image bitstream and thus may restore left and right view pictures 1832. The left and right view pictures 1832 may be three dimensionally reproduced by a stereo display device 1880 according to a stereoscopic manner.

The 3D receiving end 1820 may receive a bitstream transmitted by the transmitting end 1810, and a 3D video decoder 1825 may decode the bitstream and thus may restore multiview pictures 1822, depth maps 1824, and camera parameters 1826.

A random intermediate view image may be generated by synthesizing the multiview pictures 1822 and the depth maps 1824 or the camera parameters 1826 by using an intermediate view synthesizer 1860. Thus, numerous intermediate view images that are more than the number of multiview images that are actually transmitted may be generated. Accordingly, a total of N views images including synthetic view images that are generated by the intermediate view synthesizer 1860 may be displayed by a multiview display device 1870.

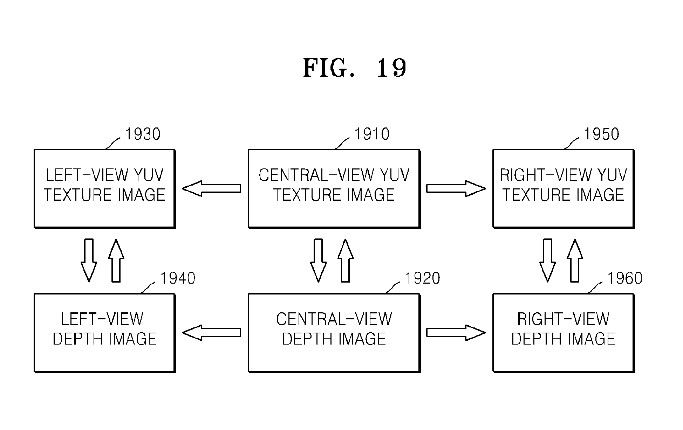

FIG. 19 illustrates an inter-layer prediction structure of a multiview video, according to an embodiment of the present invention.

According to an inter-layer prediction method according to the present embodiment, a YUV texture image and a depth image from a same view image may be encoded into different layers. Also, images with different views may be encoded as separate layers. Thus, a central-view YUV texture image 1910, a central-view depth image 1920, a left-view YUV texture image 1930, a left-view depth image 1940, a right-view YUV texture image 1950, and a right-view depth image 1960 may be encoded as separate layers.

For example, after the central-view YUV texture image 1910 is encoded, at least one of the left-view YUV texture image 1930 and the right-view YUV texture image 1950 may be encoded by referring to encoding information or a symbol of the central-view YUV texture image 1910.

After the central-view depth image 1920 is encoded, at least one of the -view depth image 1940 and the right-view depth image 1960 may be encoded by referring to encoding information or a symbol of the central-view depth image 1920.

An encoding order of the YUV texture image and the depth image with the same view may not be fixed.

When the central-view YUV texture image 1910 is first encoded, the central-view depth image 1920 may be encoded by referring to the encoding information or the symbol of the central-view YUV texture image 1910. In a case where the central-view depth image 1920 is first encoded, the central-view YUV texture image 1910 may be encoded by referring to the encoding information or the symbol of the central-view depth image 1920.

After the left-view YUV texture image 1930 is encoded, the left-view depth image 1940 may be encoded by referring to encoding information or a symbol of the left-view YUV texture image 1930. In a case where the left-view depth image 1940 is first encoded, the left-view YUV texture image 1930 may be encoded by referring to encoding information or a symbol of the left-view depth image 1940.

After the right-view YUV texture image 1950 is encoded, the right-view depth image 1960 may be encoded by referring to encoding information or a symbol of the right-view YUV texture image 1950. In a case where the right-view depth image 1960 is first encoded, the right-view YUV texture image 1950 may be encoded by referring to encoding information or a symbol of the right-view depth image 1960.

Although not illustrated in FIG. 19, the left-view depth image 1940 may be encoded by referring to the central-view YUV texture image 1910, and the right-view YUV texture image 1950 may be encoded by referring to the central-view depth image 1920. That is, a current view depth image may be encoded by referring to a different view YUV texture image, or a current view YUV texture image may be encoded by referring to a different view depth image.

The encoding process has been described so far, and in this regard, decoding has to be performed according to reference relations equal to those in the encoding process. Thus, the current view depth image may be decoded by referring to the different view YUV texture image, or the current view YUV texture image may be decoded by referring to the different view depth image.

FIG. 20 illustrates types of an inter-layer prediction mode, according to an embodiment of the present invention.

When inter-layer encoding is performed on a multiview video for an additional layer image, it may be set whether to perform inter-layer prediction 2010 that involves encoding the additional layer image by using an encoding mode for a base layer image. When the inter-layer prediction 2010 is performed, inter-layer intra prediction 2020 or first inter-layer motion prediction 2030 may be performed. When the inter-layer prediction 2010 is not performed, second inter-layer motion prediction 2040 or general motion prediction not inter-layer motion prediction 2050 may be performed.

Also, when the inter-layer encoding is performed on the multiview video for the additional layer image, inter-layer residual prediction 2060 or general residual prediction 2070 may be performed, regardless of whether the inter-layer prediction 2010 is performed.

For example, according to the inter-layer intra prediction 2020, sample values of the additional layer image may be predicted by referring to sample values of the base layer image that corresponds to the additional layer image. According to the first inter-layer motion prediction 2030, a partition type of a prediction unit, a reference index, a motion vector, or the like obtained by performing inter prediction on the base layer image that corresponds to the additional layer image may be wholly applied as an inter mode of the additional layer image. The reference index indicates an order of referring to reference images included in a reference list.

For example, according to the second inter-layer motion prediction 2040, the encoding mode of the base layer image according to the inter prediction may be referred to as an encoding mode of the additional layer image. For example, a reference index of the additional layer image may be determined by wholly employing the reference index of the base layer image, but a motion vector of the additional layer image may be predicted by referring to the motion vector of the base layer image.

For example, according to the general motion prediction not inter-layer motion prediction 2050, regardless of an encoding result with respect to the base layer image, motion prediction for the additional layer image may be performed by referring to other images of an additional layer image sequence.

Also, when the inter-layer encoding is performed on the multiview video for the additional layer image, the inter-layer residual prediction 2060 or the general residual prediction 2070 may be performed, regardless of whether the inter-layer prediction 2010 is performed.

According to the inter-layer residual prediction 2060, residual information of the additional layer image may be predicted by referring to residual information of the base layer image. According to the general residual prediction 2070, residual information of a current additional layer image may be predicted by referring to other images of the additional layer image sequence.

As described above with reference to FIG. 20, inter-layer prediction may be performed so that inter-layer encoding may be performed on the additional layer image of the multiview video. According to the inter-layer prediction, 'inter-layer mode prediction' by which the encoding mode of the additional layer image is determined; 'inter-layer residual prediction' by which the residual information of the additional layer image is determined by using the residual information of the base layer image; and 'inter-layer intra prediction' by which the additional layer image is prediction encoded by referring to the base layer image only when the base layer image indicates an intra mode may be selectively performed.

Alternatively, whether to perform the inter-layer mode prediction, whether to perform the inter-layer residual prediction, or whether to perform the inter-layer intra prediction may be determined for each coding unit or each prediction unit.

In another example, reference lists may be respectively determined for partitions indicating an inter mode, and whether to perform inter-layer motion prediction may be performed for each of the reference lists.

For example, when the inter-layer mode prediction is performed on a current coding unit (i.e., a prediction unit) of the additional layer image, a prediction mode of a coding unit (i.e., a prediction unit) of the base layer image which corresponds to the additional layer image may be determined as a prediction mode of the current coding unit (the prediction unit) of the additional layer image.

Hereinafter, for convenience of description, 'current coding units (prediction units) of additional layer/base layer images' are referred to as 'additional layer data unit/base layer data unit'.

That is, when the base layer data unit is encoded in an intra mode, inter-layer intra prediction may be performed on the additional layer data unit. When the base layer data unit is encoded in an inter mode, inter-layer motion prediction may be performed on the additional layer data unit.

However, when the base layer data unit at a position corresponding to the additional layer data unit is encoded in the inter mode, it may be further determined whether to perform inter-layer residual prediction on the additional layer data unit. When the base layer data unit is encoded in the intra mode, and the inter-layer residual prediction is performed, residual information of the additional layer data unit may be predicted by using residual information of the base layer data unit. When the base layer data unit is encoded in the inter mode, and the inter-layer residual prediction is not performed, the residual information of the additional layer data unit may be determined by performing motion prediction on additional layer data units, without referring to the residual information of the base layer data unit.

Also, when the inter-layer mode prediction is not performed on the additional layer data unit, an inter-layer prediction method may be determined according to whether a prediction mode of the additional layer data unit is a skip mode, an inter mode, or an intra mode. For example, when the prediction mode of the additional layer data unit is the inter mode, it may be determined whether to perform to the inter-layer motion prediction on each reference list of a partition. When the prediction mode of the additional layer data unit is the intra mode, it may be determined whether to perform the inter-layer intra prediction.

Whether to perform the inter-layer mode prediction, whether to perform the inter-layer residual prediction, or whether to perform the inter-layer intra prediction may be selectively determined for each data unit. For example, the inter-layer encoding apparatus 1400 may previously set whether to perform the inter-layer prediction on data units of each of slices. Also, according to whether the inter-layer prediction is performed by the inter-layer encoding apparatus 1400, the inter-layer decoding apparatus 1500 may determine whether to perform the inter-layer prediction on the data units of each of the slices.

For example, the inter-layer encoding apparatus 1400 may set whether to perform the inter-layer motion prediction on the data units of each of the slices. Also, according to whether the inter-layer motion prediction is performed by the inter-layer encoding apparatus 1400, the inter-layer decoding apparatus 1500 may determine whether to perform the inter-layer motion prediction on the data units of each of the slices.

As another example, the inter-layer encoding apparatus 1400 may set whether to perform the inter-layer residual prediction on the data units of each of the slices. Also, according to whether the inter-layer residual prediction is performed by the inter-layer encoding apparatus 1400, the inter-layer decoding apparatus 1500 may determine whether to perform the inter-layer residual prediction on the data units of each of the slices.

Hereinafter, operations of the inter-layer prediction on the additional layer data unit are further described.

- The multiview video inter-layer encoding apparatus 1400 may set whether to perform the inter-layer mode prediction on each of additional layer data units. When the inter-layer mode prediction is performed on each of the additional layer data units, only residual information of the additional layer data unit may be transmitted, and information about an encoding mode may not be transmitted.

According to whether the multiview video inter-layer encoding apparatus 1400 performed the inter-layer mode prediction on each data unit, the multiview video inter-layer decoding apparatus 1500 may determine whether to perform the inter-layer mode prediction on each of the additional layer data units.

According to whether the multiview video inter-layer encoding apparatus 1400 performed the inter-layer mode prediction on each data unit, the multiview video inter-layer decoding apparatus 1500 may also determine whether to perform the inter-layer mode prediction on each of the additional layer data units. Based on whether the inter-layer mode prediction is performed, it may be determined whether to wholly apply an encoding mode of the base layer data unit as an encoding mode of the additional layer data unit. When the inter-layer mode prediction is performed, the multiview video inter-layer decoding apparatus 1500 may not separately receive and analyze the encoding mode of the additional layer data unit but may determine a coding unit of the additional layer data unit by using the encoding mode of the base layer data unit. In this case, it is sufficient for the multiview video inter-layer decoding apparatus 1500 to receive and analyze residual information of the additional layer data unit.

- When the inter-layer mode prediction is performed, and the base layer data unit that corresponds to the additional layer data unit is encoded in an intra mode, the multiview video inter-layer decoding apparatus 1500 may perform "inter-layer intra prediction" on the additional layer data unit.

First, a restored image of the base layer data unit with the intra mode may be deblocking filtered.

A portion of the deblocking filtered restored image of the base layer data unit which corresponds to the additional layer data unit is upsampled. For example, a luma component of the additional layer data unit may be upsampled via 4-tap filtering, and a chroma component may be upsampled via bi-linear filtering.

Upsampling filtering may be performed by crossing a partition boundary of a prediction unit. Here, if a neighboring data unit is not intra encoded, a component of the current data unit at a boundary region may extend to a region outside the partition boundary and then samples for the upsampling filtering may be generated, so that the base layer data unit may be upsampled.

- When the inter-layer mode prediction is performed, and the base layer data unit that corresponds to the additional layer data unit is encoded in an inter mode, the multiview video inter-layer decoding apparatus 1500 may perform "inter-layer motion prediction" on the additional layer data unit.

First, a partition type, a reference index, a motion vector, or the like of the base layer data unit with the inter mode may be referred to. The base layer data unit that corresponds to the additional layer data unit may be upsampled and thus a partition type of the additional layer data unit may be determined. For example, when a size of a base layer partition is MxN, a partition having a size of 2Mx2N that is obtained by upsampling the base layer partition may be determined as an additional layer partition.

A reference index of the upsampled partition for the additional layer partition may be determined to be equal to a reference index of the base layer partition. A motion vector of the upsampled partition for the additional layer partition may be obtained by extending a motion vector of the base layer partition by a ratio equal to a upsampling ratio.

- When the additional layer data unit is determined as the inter mode without the inter-layer mode prediction, the multiview video inter-layer decoding apparatus 1500 may determine whether to perform the inter-layer motion prediction on the additional layer data unit.

It may be determined whether to perform the inter-layer motion prediction on each reference list of each additional layer partition. When the multiview video inter-layer decoding apparatus 1500 performs the inter-layer motion prediction, a reference index and a motion vector of the additional layer partition may be determined by referring to a reference index and a motion vector of the base layer partition corresponding to the additional layer partition.

- When the additional layer data unit is determined as the intra mode without the inter-layer mode prediction, the multiview video inter-layer decoding apparatus 1500 may determine whether to perform the inter-layer intra prediction on each of partitions of the additional layer data unit.

When the inter-layer intra prediction is performed, deblocking filtering is performed on a restored image obtained by decoding the base layer data unit that corresponds to the additional layer data unit, and upsampling is performed on the deblocking filtered restored image. For example, a 4-tap filter may be used in upsampling a luma component, and a bi-linear filter may be used in upsampling a chroma component.

The additional layer data unit may be predicted in the intra mode by referring to the upsampled restored image of the base layer data unit, so that a prediction image of the additional layer data unit may be generated. By synthesizing the prediction image of the additional layer data unit and a residual image of the additional layer data unit, a restored image of the additional layer data unit may be generated. Deblocking filtering may be performed on the generated restored image.

In the present embodiment, the inter-layer prediction may be limited to be performed under a particular condition. For example, there may be limited inter-layer intra prediction that allows intra prediction that uses the upsampled restored image of the base layer data unit only when a condition in which the base layer data unit was encoded in the intra mode is satisfied. However, when the condition is not satisfied or multi-loop decoding is performed, the multiview video inter-layer decoding apparatus 1500 may also perform complete inter-layer intra prediction according to whether the multiview video inter-layer encoding apparatus 1400 performed the inter-layer intra prediction.

- When the base layer data unit at a position that corresponds to the additional layer data unit indicates the inter mode, the multiview video inter-layer decoding apparatus 1500 may determine whether to perform inter-layer residual prediction on the additional layer data unit. Whether to perform the inter-layer residual prediction may be determined, regardless of the inter-layer mode prediction.

When the additional layer data unit indicates a skip mode, the inter-layer residual prediction cannot be performed, so that whether to perform the inter-layer residual prediction may not be determined. If the multiview video inter-layer decoding apparatus 1500 does not perform the inter-layer residual prediction, a current additional layer prediction unit may be decoded in a general inter mode by using additional layer images.

When the inter-layer residual prediction is performed, the multiview video inter-layer decoding apparatus 1500 may upsample residual information of the base layer data unit according to data units and may refer to the residual information for the additional layer data unit. For example, residual information of a transformation unit may be upsampled via bi-linear filtering.

The upsampled residual information of the base layer data unit may be synthesized with a motion compensated prediction image of the additional layer data unit, so that a prediction image due to the inter-layer residual prediction may be generated. Thus, a residual image between an original image of the additional layer data unit and the prediction image generated due to the inter-layer residual prediction may be newly generated. Conversely, the multiview video inter-layer decoding apparatus 1500 may read a residual image for the inter-layer residual prediction of the additional layer data unit from a bitstream, may synthesize the read residual image, the upsampled residual information of the base layer data unit, and the motion compensated prediction image of the additional layer data unit, and thus may generate a restored image.

In the above, as examples of the inter-layer prediction, operations of the inter-layer mode prediction, the inter-layer residual prediction, and the inter-layer intra prediction of the additional layer data unit are described in detail. Here, the examples of the inter-layer prediction may be applied to the multiview video inter-layer encoding apparatus 1400 and the multiview video inter-layer decoding apparatus 1500, and thus, the inter-layer prediction according to one or more embodiments is not limited thereto.

< Encoding information that is referable in inter-layer prediction>

Hereinafter, various examples of a plurality of pieces of encoding information, in particular, various types of encoding information about base layer data units including coding units of the tree structure, a prediction unit of a coding unit, a partition, and a transformation unit, which are referable between a base layer image and an additional layer image during the inter-layer prediction are described in detail.

- Encoding information of an additional layer maximum coding unit may be determined by referring to encoding information about a base layer maximum coding unit.
- Encoding information of an additional layer coding unit may be determined by referring to encoding information about the base layer coding unit according to the coding units of the tree structure.
- Regarding 'structure information of a coding unit' including split information or a split depth for the coding units of the tree structure, structure information of the additional layer coding unit may be determined by referring to structure information about base layer coding units. For example, structure information of current coding units of the additional layer image may be determined by wholly using structure information about coding units that are included in a maximum coding unit among maximum coding units of the base layer image, which corresponds to an additional layer maximum coding unit. Thus, coding units of a tree structure included in the additional layer maximum coding unit may have the same tree structure as the coding units of the tree structure of the base layer maximum coding unit.

As one example, the structure information about the base layer coding units may be applied to a portion of the tree structure of the additional layer coding units. For example, in order to determine a structure of coding units in a lower left region of a maximum coding unit that is split by 4 foursquare regions and is among the coding units of the tree structure included in the additional layer maximum coding unit, the structure information about the base layer coding units may be referred to. As another example, a structure of coding units that includes a maximum coding unit and is split less among the coding units of the tree structure included in the additional layer maximum coding unit may be inferred from the structure information about the base layer coding units.

- Regarding 'structure information of transformation units' including split information or a transformation depth for the transformation units having a tree structure, structure information of additional layer transformation units may be inferred from structure information about base layer transformation units. Also, the structure information about the base layer transformation units may be applied to a portion of a tree structure of the additional layer transformation units. Examples thereof are similar to the aforementioned examples related to the structure information of the coding units.
- In a prediction mode indicating an inter mode, an intra mode, a skip mode, or merge information of a prediction unit or a partition, a prediction mode of an additional layer prediction unit (i.e., a partition) may be inferred from a prediction mode of a base layer prediction unit (i.e., a partition).
- In a partition type indicating a prediction unit, a size 2Nx2N, 2NxN, Nx2N,or NxN of a partition, or an asymmetric shape, a partition type of the additional layer prediction unit (i.e., the partition) may be inferred from a partition type of the base layer prediction unit (i.e., the partition).
- Regarding residual information of a transformation unit, residual information of an additional layer transformation unit may be inferred from residual information of a base layer transformation unit. Also, only a part of the residual information of the additional layer transformation unit may be inferred from the residual information of the base layer transformation unit.
- Regarding a transform coefficient value of the transformation unit, a transform coefficient value of the additional layer transformation unit may be inferred by referring to a transform coefficient value of the base layer transformation unit. Also, only a portion of the transform coefficient value of the additional layer transformation unit may be inferred from the transform coefficient value of the base layer transformation unit. For example, only a DC component or a predetermined number of low frequency components of the transform coefficient value of the additional layer transformation unit may be inferred from the transform coefficient value of the base layer transformation unit.
- Regarding a position of a transform coefficient of the transformation unit, positions of non-zero transform coefficients of the additional layer transformation unit may be inferred from positions of non-zero transform coefficients among transform coefficients of the base layer transformation unit.
- Regarding restored texture information, texture information of the additional layer data unit may be determined by referring to restored texture information of the base layer data unit.
- A restored prediction value of the base layer data unit, e.g., a prediction value that is determined by using a value of a neighboring data unit that is spatially adjacent to the current data unit in the intra mode, or a prediction value that is generated by performing motion compensation by using a previously restored reference frame in the inter mode may be wholly used as a prediction value of the additional layer data unit.

- Inter prediction related information of the additional layer prediction unit may be determined by referring to inter prediction related information of the base layer prediction unit indicating the inter mode. For example, inter prediction related information that is referable for inter-layer prediction may include a motion vector, a motion vector difference value (MVD), a reference index, and an inter prediction direction (uni-direction/bi-direction). Also, a merge index and motion competition scheme information such as an advanced motion vector prediction index (AMVP index) of a prediction unit may be referred to as the inter prediction related information.

- Intra prediction related information of the additional layer prediction unit may be determined by referring to intra prediction related information of the base layer prediction unit indicating the intra mode. For example, the intra prediction related information that is referable for inter-layer prediction may include an intra prediction direction, or a linear mode and a derivation mode that are prediction modes between luma and chroma components. The linear mode is the prediction mode in which a prediction value of a chroma component pixel is determined from a pixel of a neighboring data unit that is adjacent to the current data unit and a restored luma component pixel of the current data unit, and the derivation mode is the prediction mode in which a prediction mode of the luma component is wholly used as a prediction mode of the chroma component.

- A loop filter parameter of the additional layer data unit may be determined by referring to a loop filter parameter for the base layer data unit. For example, a loop filter parameter that is referable for the inter-layer prediction may include a sample adaptive offset (SAO) type, positions of bands having a non-zero band offset (BO), an edge offset value, and a band offset value that are parameters for an SAO method. Alternatively, the loop filter parameter that is referable for the inter-layer prediction may include filter classification information for adaptive loop filtering (ALF), a filter coefficient, or a filtering on/off flag.

- Encoding syntax for the additional layer image may be determined by using encoding syntax that is determined as a result of encoding the base layer image.

Above, various embodiments of the encoding information that is referable for the inter-layer prediction are described in detail. However, encoding information to be referred to by the multiview video inter-layer encoding apparatus 1400 and the multiview video inter-layer decoding apparatus 1500 so as to perform the inter-layer prediction is not limited to the aforementioned various embodiments.

The multiview video inter-layer encoding apparatus 1400 and the multiview video inter-layer decoding apparatus 1500 may control the inter-layer prediction for each sequence, each slice, or each picture. For example, for inter-layer prediction on a first picture (or a sequence or a slice), first encoding information of the additional layer data unit is determined by referring to first encoding information of the base layer data unit, but for inter-layer prediction on a second picture, second encoding information of the additional layer data unit is determined by referring to second encoding information of the base layer data unit.

However, encoding information of the base layer data unit is not always referable in a one-to-one manner, thus, encoding information of the additional layer data unit may be predicted by referring to at least two pieces of encoding information of the base layer data unit.

<Inferred inter-layer prediction method>

Hereinafter, an inferred inter-layer prediction method indicates a prediction method by which encoding information of the additional layer data unit is determined by referring to a combination of at least two pieces of encoding information of the base layer data unit.

For example, when a series of pieces of encoding information of the base layer data unit are determined, a plurality of pieces of encoding information of the additional layer data unit may be determined by wholly using the series of pieces of encoding information of the base layer data unit. For example, first encoding information, third encoding information, and fifth encoding information of the additional layer data unit may be determined to be equal to first encoding information, third encoding information, and fifth encoding information among N pieces of encoding information of the base layer data unit.

Also, the multiview video inter-layer encoding apparatus 1400 and the multiview video inter-layer decoding apparatus 1500 according to the embodiments may separately control inferred inter-layer prediction for each of a sequence, a picture, and a slice. Also, the inferred inter-layer prediction method may be separately controlled for each of a maximum coding unit, a coding unit, a prediction unit (partition), and a transformation unit in one picture.

It may be determined whether to separately perform inferred inter-layer prediction on at least one data unit among the sequence, the picture, the slice, the maximum coding unit, the coding unit, the prediction unit (partition), and the transformation unit. For example, the inferred inter-layer prediction may not be performed on the first picture (or the sequence or the slice) but may be performed on the second picture. Also, the inferred inter-layer prediction may be allowed for data units included in a first maximum coding unit of a picture but may not be allowed for data units included in a second maximum coding unit of the picture.

Also, the inferred inter-layer prediction method may be separately determined on at least one data unit among the sequence, the picture, the slice, the maximum coding unit, the coding unit, the prediction unit (partition), and the transformation unit. For example, first encoding information and fourth encoding information of the additional layer data unit may be determined by using only first encoding information and fourth encoding information of the base layer data unit by performing the inferred inter-layer prediction on the first picture (or the sequence or the slice), but first encoding information, second encoding information, fifth encoding information, and eighth encoding information of the additional layer data unit may be determined by wholly using first encoding information, second encoding information, fifth encoding information, and eighth encoding information of the base layer data unit by performing the inferred inter-layer prediction on the second picture.

In more detail, all encoding information of the additional layer data unit may be predicted from the base layer data unit according to an inferred mode of the inferred inter-layer prediction. Thus, encoding information for the additional layer data unit may not be encoded. According to the inferred mode, an inferred mode parameter for the additional layer data unit may be encoded as a 'true' value, and then the encoding information may not be encoded at all.

For example, according to inferred prediction of the inferred inter-layer prediction, all encoding modes of the additional layer data unit may be inferred from an encoding mode of the base layer data unit. Thus, an encoding mode of encoding information of the additional layer data unit which is inferable from the base layer data unit may not be encoded. However, according to the inferred prediction, although the encoding mode of the additional layer data unit may be wholly used from the encoding mode of the base layer data unit, a transformation coefficient or residual information of the encoding information of the additional layer data unit may be separately determined. When an inferred prediction parameter for the additional layer data unit is encoded as a 'true' value, the transformation coefficient or the residual information of the additional layer data unit may be encoded, and the encoding mode that is inferable from the base layer data unit may not be encoded.

The multiview video inter-layer decoding apparatus 1500 may not parse information about the encoding mode and the transformation coefficient (or the residual information), based on the inferred mode parameter. Also, the multiview video inter-layer decoding apparatus 1500 may not parse the encoding mode of the additional layer data unit, based on the inferred prediction parameter.

However, the aforementioned inferred mode and the inferred prediction are embodiments of the inferred inter-layer prediction method. As described above, the inferred inter-layer prediction corresponds to the inter-layer prediction method by which the encoding information of the additional layer data unit is determined by wholly using a plurality of pieces of encoding information of the base layer data unit with respect to the predetermined series of pieces of encoding information.

The multiview video inter-layer encoding apparatus 1400 may separately transmit a parameter to indicate whether to perform the inferred inter-layer prediction for each sequence, each picture, or each slice by using a sequence parameter set (SPS), a picture parameter set (PPS), an adaptation parameter set (APS), or a slice header. Also, a parameter to indicate whether to perform the inferred inter-layer prediction may be transmitted as an encoding mode for at least one data unit among the maximum coding unit, the coding unit, the transformation unit, and the prediction unit (partition).

Also, the multiview video inter-layer decoding apparatus 1500 may parse the parameter for each sequence, each picture, or each slice from the SPS, the PPS, the APS, or the slice header. Similarly, information indicating whether to perform the inferred inter-layer prediction according to the inferred mode or the inferred prediction may be parsed as the encoding mode of at least one data unit among the maximum coding unit, the coding unit, the transformation unit, and the prediction unit (partition).

Also, although information about the encoding mode of the additional layer data unit is inferred from the information about the encoding mode of the base layer data unit via the inter-layer prediction, refinement information for finely adjusting the inferred information may be encoded for the additional layer data unit. For example, the multiview video inter-layer decoding apparatus 1500 may infer positions of non-zero coefficients of the additional layer data unit from non-zero coefficient position information of the base layer data unit, and may readjust coefficient values of the additional layer data unit by using read refinement information.

For example, an 'abs_level_minus_1' parameter for transformation coefficients may be read as refinement information of the transformation coefficients. When the 'abs_level_minus_1' parameter indicates a true value, this may mean that a value that is decreased by 1 from an absolute value of an original value of a non-zero coefficient may be transmitted as non-zero coefficient information. Thus, the non-zero coefficient information that is received and parsed is increased by 1, so that a size of an inferred coefficient of the additional layer data unit may be exactly predicted.

The refinement information is not limited to the 'abs_level_minus_1' parameter and thus may include parameters for adjusting prediction values with respect to various types of information.

<Mapping relation of upper/base layer data units in inter-layer prediction>

Since the additional layer data unit and the base layer data unit are different from each other in a spatial resolution, a temporal resolution, or an image quality according to an inter-layer encoding method with respect to a multiview video, the multiview video inter-layer encoding apparatus 1400 and the multiview video inter-layer decoding apparatus 1500 according to the embodiments may determine the base layer data unit that corresponds to the additional layer data unit in the inter-layer prediction and then may refer to the base layer data unit.

For example, according to scalable video encoding and decoding methods based on a spatial scalability, a spatial resolution of the base layer image differs from that of the additional layer image, and in general, a resolution of the base layer image is less. Thus, in order to determine a position of the base layer data unit that corresponds to the additional layer data unit, a resizing ratio of resolutions may be considered. The resizing ratio of lower additional layer data units may be randomly determined. For example, a mapping position may be exactly determined at a sub-pixel level such as a size of 1/16 pixel.

When positions of the additional layer data unit and the base layer data unit are expressed as coordinates, below Mapping Equations 1, 2, 3, and 4 are used in determining coordinates of the base layer data unit that are mapped with coordinates of the additional layer data unit. In Mapping Equations 1, 2, 3, and 4, a Round() function outputs a round-off value of an input value.

Mapping Equation 1:

$$B_x = Round(\frac{E_x * D_x + R_x}{2^{(S-4)}})$$

Mapping Equation 2:

$$B_y = Round(\frac{E_y * D_y + R_y}{2^{(S-4)}})$$

Mapping Equation 3:

$$D_x = Round(\frac{2^S * BaseWidth}{ScaledBaseWidth})$$

Mapping Equation 4:

$$D_y = Round(\frac{2^S * BaseHeight}{ScaledBaseHeight})$$

In Mapping Equations 1 and 2, Bx and By indicate X and Y-axes coordinates values of the base layer data unit, respectively, and Ex and Ey indicates X and Y-axes coordinates values of the additional layer data unit, respectively. Rx and Ry respectively indicate reference offsets for improving mapping exactness in X and Y-axes directions. S indicates a resizing ratio of resolutions. In Mapping Equations 3 and 4, 'BaseWidth' and 'BaseHeight' indicate a width and a height of a lower data unit, respectively, and 'ScaledBaseWidth' and 'ScaledBaseHeight' respectively indicate a width and a height of the lower data unit that is upsampled.

Thus, by using the resizing ratio of resolutions and the reference offsets for the mapping exactness, the X and Y-axes coordinates values of the base layer data unit that correspond to the X and Y-axes coordinates values of the additional layer data unit may be determined.

However, Mapping Equations 1, 2, 3, and 4 are only exemplary embodiments of the present invention.

In the present embodiment, a mapping position for the base/additional layer data units may be determined in consideration of various factors. For example, the mapping position for the base/additional layer data units may be determined in consideration of at least one factor among a resolution ratio, an aspect ratio, a translation distance, and an offset of base/additional layer videos.

The multiview video inter-layer encoding apparatus 1400 and the multiview video inter-layer decoding apparatus 1500 according to the embodiments may perform the inter-layer prediction based on coding units of a tree structure. According to the coding units of the tree structure, the coding units are determined according to depths, thus, sizes of the coding units are not equal. Thus, a position of the base layer coding unit that corresponds to the additional layer coding unit has to be separately determined.

Hereinafter, various mapping relations that are available between multilevel data units including a maximum coding unit, a coding unit, a prediction unit, a transformation unit, or a partition of the additional layer image and multilevel data units of the base layer image.

FIG. 21 illustrates a mapping relation between a base layer and an additional layer, according to an embodiment of the present invention. In particular, FIG. 21 illustrates the mapping relation between the base layer and the additional layer for inter-layer prediction based on coding units of a tree structure. The base layer data unit that is determined to correspond to the additional layer data unit may be referred as 'reference layer data unit'.

In the present embodiment, for the inter-layer prediction, a position of a base layer maximum coding unit 2110 that corresponds to an additional layer maximum coding unit 2120 may be determined. For example, to which data unit among base layer data units a sample 2180 that corresponds to an upper left sample 2190 of the additional layer maximum coding unit 2120 belongs is examined, so that it may be determined that the base layer maximum coding unit 2110 including the sample 2180 that is an upper left sample is a data unit that corresponds to the additional layer maximum coding unit 2120.

If a structure of the additional layer coding unit is inferable from a structure of the base layer coding unit via the inter-layer prediction, a tree structure of coding units that are included in the additional layer maximum coding unit 2120 may be determined to be equal to a tree structure of coding units that are included in the base layer maximum coding unit 2110.

Similar to the coding unit, a size of a partition (a prediction unit) or a transformation unit included in the coding units according to the tree structure may vary according to a size of a corresponding coding unit. Also, although partitions or transformation units are included in coding units having a same size, sizes of the partitions or the transformation units may be changed according to a partition type or a transformation depth. Thus, for the partitions or the transformation units based on the coding units of the tree structure, a position of a base layer partition or a base layer transformation unit that correspond to an additional layer partition or an additional layer transformation unit may be separately determined.

- In FIG. 21, in order to determine a reference layer maximum coding unit for the inter-layer prediction, a position of a predetermined data unit (i.e., the sample 2180) of the base layer maximum coding unit 2110 that corresponds to a position of the upper left sample 2190 of the additional layer maximum coding unit 2120 was examined. Similarly, a reference layer data unit may be determined by comparing the position of the base layer data unit, positions of centers, or predetermined positions that correspond to an upper left sample of the additional layer data unit.
- Referring to FIG. 21, maximum coding units of another layer are mapped for the inter-layer prediction, and in this regard, data units of the other layer may be mapped with respect to various coding units that include a maximum coding unit, a coding unit, a prediction unit, a partition, a transformation unit, a minimum unit, or the like.
- Thus, in order to determine the base layer data unit that corresponds to the additional layer data unit for the inter-layer prediction, the base layer data unit may be upsampled by a spatial resizing ratio or spatial aspect ratio of a resolution. Also, an upsampled position may be moved by the reference offset, so that a position of the reference layer data unit may be exactly determined. Information about the reference offset may be directly exchanged between the multiview video inter-layer encoding apparatus 1400 and the multiview video inter-layer decoding apparatus 1500. Although the information about the reference offset is not directly exchanged, the reference offset may be predicted according to adjacent motion information, disparity information, or a geometrical shape of the additional layer data unit.

For example, when the disparity information between a base view data unit and an additional view data unit is received, the base view data unit that is mapped with the additional view data unit is moved by a disparity of the disparity information, so that an exact mapping position may be determined.

Although the disparity information is not received, disparity information of a current data unit may be estimated by referring to disparity information or motion information of a neighboring data unit of the current data unit of the additional layer image. By using the estimated disparity information, the base layer data unit that is mapped with the current data unit of the additional layer image may be determined.

Even if the disparity information is not received, a disparity between the base layer image and the additional layer image may be estimated by using a depth map of the base layer image. By using the estimated disparity, the base layer data unit that is mapped with the current data unit of the additional layer image may be determined.

- Encoding information about a position of the base layer data unit that corresponds to a position of the additional layer data unit may be used for inter-layer prediction with respect to the additional layer data unit. The encoding information that is referable may include at least one of an encoding mode, a prediction value, a restored value, structure information of a data unit, and syntax.

For example, a structure of the additional layer data unit may be inferred from a structure (a structure of a maximum coding unit, a structure of a coding unit, a structure of a prediction unit, a structure of a partition, a structure of a transformation unit, etc.) of the corresponding base layer data unit.

- Also, the inter-layer prediction may be performed not only on a case where data units of layer images are compared therebetween but also may be performed between at least two data unit groups. A base layer data unit group including a position that corresponds to an additional layer data unit group may be determined.

For example, a base layer data unit group including a data unit among base layer data units which corresponds to a data unit at a predetermined position in the additional layer data unit group may be determined as a reference layer data unit group.

- Data unit group information may indicate a structure condition for forming a group of data units. For example, coding unit group information for additional layer coding units may be inferred from coding unit group information for forming a group of coding units of the base layer image. For example, the coding unit group information may include a condition by which coding units having a depth equal to or less than a predetermined depth are gathered to constitute a coding unit group, a condition by which coding units that are less than a predetermined total number of units are gathered to constitute a coding unit group, etc.

The data unit group information may be encoded and may be directly exchanged between the multiview video inter-layer encoding apparatus 1400 and the multiview video inter-layer decoding apparatus 1500. In another example, although the data unit group information is not exchanged, additional layer data unit group information may be predicted from base layer data unit group information between the multiview video inter-layer encoding apparatus 1400 and the multiview video inter-layer decoding apparatus 1500.

- Similar to the coding unit group information, group information about the additional layer maximum coding unit (transformation unit) may be inferred based on group information about the base layer maximum coding unit (transformation unit) via the inter-layer prediction.
- Also, the inter-layer prediction may be performed between upper/base layer data slices. Encoding information about an additional layer slice including the additional layer data unit may be inferred by referring to encoding information about a base layer slice including the base layer data unit at a position that corresponds to the additional layer data unit. Here, encoding information about a slice may include not only information about a slice structure such as a slice shape but also may include a plurality of pieces of encoding information about data units included in the slice.
- Also, the inter-layer prediction may be performed between upper/base layer tiles. Encoding information about an additional layer tile including the additional layer data unit may be inferred by referring to encoding information about a base layer tile including the base layer data unit at a position that corresponds to the additional layer data unit. Here, encoding information about a tile may include not only information about a tile structure such as a tile shape but also may include a plurality of pieces of encoding information about data units included in the tile.
- As described above, the additional layer data unit may refer to the same-type base layer data unit. Alternatively, the additional layer data unit may refer to a different-type base layer data unit.

In the above < Encoding information that is referable in inter-layer prediction>, various types of encoding information of the base layer data unit which are referable by the additional layer data unit are presented. However, according to the one or more embodiments, encoding information that is inferable in the inter-layer prediction is not limited to the various types of encoding information, and may be interpreted as various types of data generated as a result of encoding the additional layer image and the base layer image.

Also, for the inter-layer prediction, only one piece of encoding information may not be referred between the upper/base layer data units but a combination of one or more pieces of encoding information may be referred therebetween. Two or more pieces of referable encoding information may be variously combined, so that a reference encoding information set may vary.

Similarly, in the above <Mapping relation of upper/base layer data units in inter-layer prediction>, the mapping relation between the additional layer data unit and the base layer data unit that correspond to each other is variously presented. However, according to the one or more embodiments, the mapping relation between the upper/base layer data units during the inter-layer prediction is not limited to the aforementioned types of the mapping relation, and thus, the mapping relation may be interpreted as various mapping relations between the additional layer data unit (or the additional layer data unit group) and the base layer data unit (or the base layer data unit group) that may be related to each other.

In addition, a combination of the reference encoding information set that is referable between the upper/base layer data units for the inter-layer prediction, and the mapping relation between the upper/base layer data units may vary. For example, the reference encoding information set for the inter-layer prediction may vary in a manner of $\alpha$, $\beta$, $\gamma$, $\delta$, ..., etc., and the mapping relation between the upper/base layer data units may vary in a manner of I , II, III, V... etc. In this case, the combination of the reference encoding information set and the mapping relation may be set as at least one of "the reference encoding information set $\alpha$ and the mapping relation I ", "$\alpha$ and II", "$\alpha$ and III", "$\alpha$ and V", ..., "the reference encoding information $\beta$ and the mapping relation I ", "$\beta$ and II", "$\beta$ and III", "$\beta$ and V", ..., "the reference encoding information $\gamma$ and the mapping relation I", "$\gamma$ and II", "$\gamma$ and III", "$\gamma$ and V", ..., "the reference encoding information $\delta$ and the mapping relation I", "$\delta$ and II", "$\delta$ and III", and "$\delta$ and V". Also, one mapping relation may be combined with at least two reference encoding information sets, or one reference encoding information set may be combined with at least two mapping relations.

Hereinafter, embodiments where data units at different levels are mapped during inter-layer prediction between upper/base layer data images are described in detail.

For example, an additional layer coding unit may refer to encoding information about a base layer maximum coding unit group including a position that corresponds to the additional layer coding unit. Conversely, an additional layer maximum coding unit may refer to encoding information about a base layer coding unit group including a position that corresponds to the additional layer maximum coding unit.

For example, encoding information of the additional layer coding unit may be determined by referring to the encoding information about the base layer maximum coding unit group including the corresponding position. That is, positions that respectively correspond to positions of the additional layer coding unit may be all included in the referred base layer maximum coding unit group.

Similarly, encoding information of the additional layer maximum coding unit may be determined by referring to the encoding information of the base layer coding unit group including the corresponding position. That is, positions that respectively correspond to positions of the additional layer maximum coding unit may be all included in the referred base layer coding unit group.

In the present embodiment, as described above, it is possible to determine whether to separately perform inferred inter-layer prediction on each sequence, each picture, each slice, or each maximum coding unit.

Also, although inter-layer prediction is performed on a predetermined data unit, the inferred inter-layer prediction may be partially controlled in the predetermined data unit. For example, if whether to perform the inter-layer prediction at a maximum coding unit level is determined, although the inter-layer prediction is performed on a current maximum coding unit of the additional layer image, the inferred inter-layer prediction is performed only on some data units among lower-level data units (e.g., a coding unit, a prediction unit, a transformation unit, a partition, etc.) included in the current maximum coding unit, by using a corresponding base layer data unit, and the inferred inter-layer prediction is not performed on the rest of the lower-level data units that do not have a corresponding base layer data unit. Thus, some data units (e.g., a coding unit, a prediction unit, a transformation unit, a partition, etc.) included in the additional layer maximum coding unit may be inferred from the base layer data unit, and encoding information about the rest of the additional layer maximum coding unit may be encoded and exchanged.

For example, when the inter-layer prediction is performed on the additional layer maximum coding unit, an additional layer coding unit among coding units of the additional layer maximum coding unit, which has a corresponding base layer coding unit, may be predicted by referring to a restored image that is generated by performing intra prediction on the base layer coding unit. However, for an additional layer coding unit that does not have the intra-predicted base layer coding unit, single layer prediction using an additional layer image may be performed, instead of performing the inter-layer prediction. Also, inferred inter-layer prediction may be performed for an additional layer data unit only when a predetermined condition about the base layer data unit is satisfied. When the predetermined condition is satisfied and thus the inferred inter-layer prediction is available, the multiview video inter-layer encoding apparatus 1400 may transmit information indicating whether the inferred inter-layer prediction was actually performed. The multiview video inter-layer decoding apparatus 1500 parses information indicating whether the inferred inter-layer prediction is available, reads the information and thus recognizes that the predetermined condition was satisfied and thus the inferred inter-layer prediction was performed. When the predetermined condition is satisfied, the multiview video inter-layer decoding apparatus 1500 may determine encoding modes of the additional layer data unit by wholly referring to a combination of encoding modes of the base layer data unit.

For example, residual prediction between prediction units of different layers may be performed only when a size of the additional layer prediction unit is equal to or greater than a size of the base layer prediction unit. For example, inter-layer prediction between maximum coding units of different layers may be performed only when a size of the additional layer maximum coding unit is equal to or greater than a size of the base layer maximum coding unit. This is because a maximum coding unit or a prediction unit of a base layer is upsampled according to a resizing ratio or aspect ratio of a resolution.

In another embodiment, an inferred inter-layer prediction mode may be performed under a condition of a predetermined slice type such as a I-, B-, or P-slice of the additional layer data unit.

According to an example of the inferred inter-layer prediction, prediction may be performed in an inter-layer intra skip mode. In the inter-layer intra skip mode, residual information in an intra mode for the additional layer data unit does not exist, so that a base layer intra restored image that corresponds to the additional layer data unit may be wholly used as an intra restored image of the additional layer data unit.

Thus, in more specific, according to whether a slice type of the additional layer data unit is an inter-mode slice type such as a B-, P-slice, or the like, or is an intra-mode slice type such as an I-slice, it is possible to determine whether to encode (decode) information indicating the inter-layer intra skip mode.

Also, for the inter-layer prediction, the encoding information of the base layer data unit may be modified and used or may be reduced and used.

As one example, a motion vector of a base layer partition may be downwardly modified to accuracy of a particular pixel level such as an integer pixel level or a sub-pixel level of a 1/2 pixel level, and a motion vector with the downwardly-modified accuracy of the base layer partition may be used as a motion vector of an additional layer partition.

As another example, motion vectors of base layer partitions are merged into one and then may be referred to by the additional layer partition.

For example, a region where the motion vectors are merged may be determined as a fixed region. Then, the motion vectors may be merged only in partitions that are included in the region having a fixed size, or in data units at fixed adjacent positions.

In another example, although at least two base layer data units correspond to an additional layer data unit having a predetermined size, a motion vector of the additional layer data unit may be determined by using only motion information about one data unit among the base layer data units. For example, among a plurality of base layer data units that correspond to an additional layer data unit having a size of 16x16, a motion vector of a base layer data unit at a predetermined position may be used as a motion vector of the additional layer data unit.

In an embodiment, control information for determining a region where motion vectors are merged may be inserted into an SPS, a PPS, an APS, or a header of a slice and may be transmitted. Thus, the control information for determining the region where the motion vectors are merged may be parsed for each sequence, each picture, each adaptation parameter, or each slice. Also, motion information of a base layer partition may be modified and stored. In principle, the motion information of the base layer partition is stored as a combination of a reference index and a motion vector. However, in the present embodiment, the reference index is assumed as 0, and a size of the motion information of the base layer partition may be adjusted or modified to a motion vector that corresponds to 0 and then may be stored. Accordingly, a storage capacity of the motion information of the base layer partition may be decreased. For inter-layer prediction on an additional layer partition, the stored motion vector of the base layer partition may be modified again according to a reference image that corresponds to a reference index of the additional layer partition. That is, a motion vector of the additional layer partition may be determined by using the motion vector of the base layer partition that is modified according to the reference image of the additional layer partition.

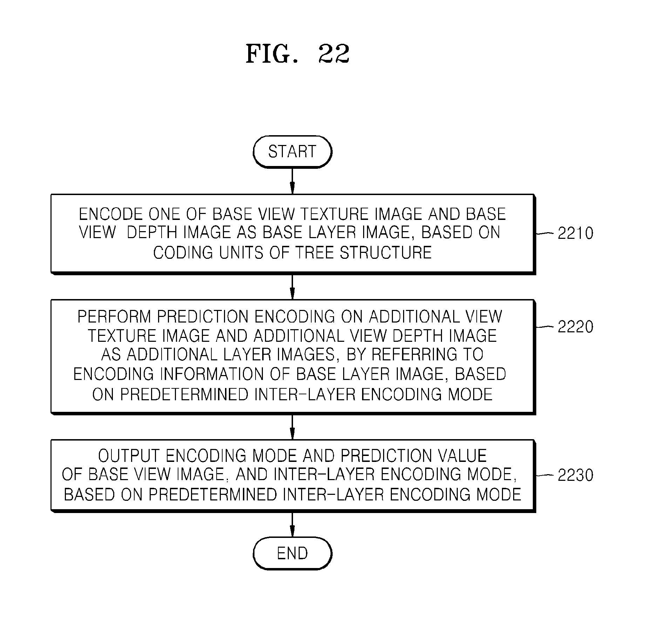

FIG. 22 is a flowchart of a multiview video inter-layer encoding method, according to an embodiment of the present invention.

In operation 2210, a base layer image is encoded based on coding units of a tree structure.

In operation 2220, an inter-layer encoding mode is determined so as to perform inter-layer encoding on an additional layer image based on the coding units of the tree structure by referring to the base layer image. Based on the determined inter-layer encoding mode, prediction encoding is performed on the additional layer image by referring to encoding information of the base layer image.

In the present embodiment, the additional layer image may be encoded by referring to at least one of encoding information of a coding unit and encoding information of a transformation unit included in the coding unit in the encoding mode of the base layer image.

In the present embodiment, an encoding mode of the additional layer image may be determined by referring to at least one of structure information, a prediction mode, a partition type, motion information, intra information, loop filtering-related information, non-zero coefficient position information, and restored texture information in the encoding mode of the base layer image.

In the present embodiment, a prediction value of the additional layer image may be determined by referring to at least one of residual information, coefficient information, and a restored prediction value in the encoding mode of the base layer image.

A data unit of the base layer image that is to be referred to by a data unit of the additional layer image is determined based on the inter-layer encoding mode. The data unit based on the coding units of the tree structure may include at least one of a maximum coding unit, a coding unit, and a prediction unit, a transformation unit, and a minimum unit that are included in the coding unit. Prediction encoding is performed on the additional layer image by referring to encoding information of the determined data unit of the base layer image.

In the present embodiment, a data unit of the base layer image that is the same type as a current data unit of the additional layer image is determined, and a current data unit of the additional layer image may be encoded by referring to encoding information of the data unit of the base layer image.

In the present embodiment, a data unit group of the base layer image that is the same group type as a current data unit group of the additional layer image may be determined, and the current data unit group of the additional layer image may be encoded by referring to encoding information of the data unit group of the base layer image.

In the present embodiment, a data unit of the base layer image that is a different type corresponding to the current data unit of the additional layer image may be referred to. A data unit group of the base layer image that is a different type corresponding to the current data unit group of the additional layer image may be referred to.

When an inter-layer prediction mode is determined for the current data unit of the additional layer image, some of lower data units included in the current data unit may be encoded by referring to the base layer image, and the rest of the lower data units may be encoded in the additional layer image.

Encoding information that is inferred from the base layer image may be changed and encoding information of the additional layer image may be determined by referring to the changed encoding information.

In operation 2230, the encoding mode and the prediction value of the base layer image based on the inter-layer encoding mode, and the inter-layer encoding mode of the additional layer image are output.

According to a first inter-layer encoding mode, the rest of the encoding information excluding information that is inferred from the encoding information of the base layer image may be further output. According to a second inter-layer encoding mode, only the inter-layer encoding mode of the additional layer image may be output.

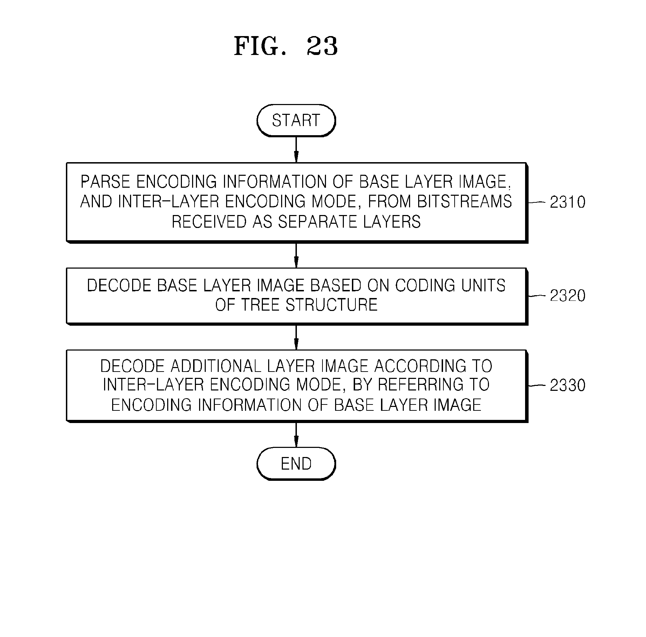

FIG. 23 is a flowchart of a multiview video inter-layer decoding method, according to an embodiment of the present invention.

In operation 2310, an encoding mode and a prediction value of a base layer image, and an inter-layer encoding mode of an additional layer image are parsed from a received bitstream. For example, according to a first inter-layer encoding mode, the rest of encoding information excluding information that is inferred from encoding information of the base layer image may be parsed from the bitstream. According to a second inter-layer encoding mode, only inter-layer encoding mode information of the additional layer image may be parsed from the bitstream.

In operation 2320, the base layer image is decoded based on coding units of a tree structure by using the encoding mode and the prediction value of the parsed base layer image.

In operation 2330, the additional layer image is decoded based on the coding units of the tree structure, and in this regard, prediction decoding is performed on the additional layer image by referring to the encoding information of the base layer image, based on the inter-layer encoding mode of the additional layer image.

In the present embodiment, an encoding mode of the additional layer image may be determined by referring to the encoding information of the base layer image. In the present embodiment, the encoding mode of the additional layer image may be determined by referring to at least one of structure information, prediction mode information, partition type information, motion information, intra information, loop filtering-related information, non-zero coefficient position information, and restored texture information in the encoding mode of the base layer image. In the present embodiment, a prediction value of the additional layer image may be determined by referring to at least one of residual information, coefficient information, and a restored prediction value in the encoding mode of the base layer image. The additional layer image may be decoded based on encoding information of the additional layer image that is inferred and determined in the aforementioned way.

According to the inter-layer encoding mode of the additional layer image, a data unit of the base layer image to be referred to by a data unit of the additional layer image is determined. Prediction decoding may be performed on the coding units of the tree structure of the additional layer image by referring to encoding information of the data unit of the base layer image.

In the present embodiment, encoding information of a current data unit of the additional layer image may be determined by referring to encoding information of a data unit of the base layer image that corresponds to the current data unit of the additional layer image.

In the present embodiment, encoding information of a current data unit group of the additional layer image may be determined by referring to encoding information of a data unit group of the base layer image that corresponds to the current data unit group of the additional layer image.

In the present embodiment, a data unit of the base layer image that is a different type that corresponds to the current data unit of the additional layer image may be referred to. In the present embodiment, a data unit group of the base layer image that is a different type that corresponds to a current data unit group of the additional layer image may be referred to.

In the present embodiment, when an inter-layer prediction mode is determined for the current data unit of the additional layer image, some of lower data units included in the current data unit may be decoded by referring to the base layer image, and the rest of the lower data units may be encoded in the additional layer image.

In each of the coding units, decoding is performed on a maximum coding unit so that image data in a spatial domain may be restored, and a video that is formed of pictures and pictures sequences may be restored. The restored video may be reproduced by a reproducing apparatus, may be stored in a storage medium, or may be transmitted via a network.

The multiview video inter-layer encoding method described with reference to FIG. 22 corresponds to operations by the multiview video inter-layer encoding apparatus 1400. The multiview video inter-layer encoding apparatus 1400 may include a memory having recorded thereon a program for executing, by using a computer, the multiview video inter-layer encoding method described with reference to FIGS. 19 and 21, may retrieve and execute the program from the memory, and thus may perform operations of the multiview video inter-layer encoding apparatus 1400 which are described above with reference to FIG. 14. Alternatively, the multiview video inter-layer encoding apparatus 1400 may read and execute a program from a recording medium having recorded thereon the program for executing the multiview video inter-layer encoding method, by using a computer, so that the multiview video inter-layer encoding apparatus 1400 may perform operations of the multiview video inter-layer encoding apparatus 1400 which are described above with reference to FIG. 14.

The multiview video inter-layer decoding method described with reference to FIG. 23 corresponds to operations by the multiview video inter-layer decoding apparatus 1500. The multiview video inter-layer decoding apparatus 1500 may include a memory having recorded thereon a program for executing, by using a computer, the multiview video inter-layer decoding method described with reference to FIGS. 20 and 22, may retrieve and execute the program from the memory, and thus may perform operations of the multiview video inter-layer decoding apparatus 1500 which are described above with reference to FIG. 15. Also, the multiview video inter-layer decoding apparatus 1500 may read and execute the program from a recording medium having recorded thereon a program for executing the multiview video inter-layer decoding method, by using a computer, so that the multiview video inter-layer decoding apparatus 1500 may perform operations of the multiview video inter-layer decoding apparatus 1500 which are described above with reference to FIG. 15.

For convenience of description, the multiview video encoding method, , or the video encoding method according to the multiview video encoding method, which are described with reference to FIGS. 1 through 23, will be collectively referred as 'the video encoding method according to the present invention'. Also, the multiview video decoding method or the video decoding method according to the multiview video decoding method, which are described with reference to FIGS. 1 through 23, will be collectively referred as 'the video decoding method according to the present invention'.

Also, a video encoding apparatus including a multiview video inter-layer encoding apparatus 10, the video encoding apparatus 100, or the image encoder 400, which is described with reference to FIGS. 1 through 23, will be collectively referred as a 'video encoding apparatus according to the present invention'. Also, a video decoding apparatus including a multiview video decoding apparatus 20, the video decoding apparatus 200, or the image decoder 500, which is described with reference to FIGS. 1 through 23, will be referred to as a 'video decoding apparatus according to the present invention'.

A computer-readable recording medium storing a program, e.g., a disc 26000, according to an embodiment of the present invention will now be described in detail.

FIG. 24 is a diagram of a physical structure of the disc 26000 in which a program is stored, according to an embodiment of the present invention. The disc 26000, which is a storage medium, may be a hard drive, a compact disc-read only memory (CD-ROM) disc, a Blu-ray disc, or a digital versatile disc (DVD). The disc 26000 includes a plurality of concentric tracks Tr that are each divided into a specific number of sectors Se in a circumferential direction of the disc 26000. In a specific region of the disc 26000, a program that executes the quantized parameter determining method, the video encoding method, and the video decoding method described above may be assigned and stored.

A computer system embodied using a storage medium that stores a program for executing the video encoding method and the video decoding method as described above will now be described with reference to FIG. 22.

FIG. 25 is a diagram of a disc drive 26800 for recording and reading a program by using the disc 26000. A computer system 26700 may store a program that executes at least one of a video encoding method and a video decoding method according to an embodiment of the present invention, in the disc 26000 via the disc drive 26800. To run the program stored in the disc 26000 in the computer system 26700, the program may be read from the disc 26000 and be transmitted to the computer system 26700 by using the disc drive 26800.

The program that executes at least one of a video encoding method and a video decoding method according to an embodiment of the present invention may be stored not only in the disc 26000 illustrated in FIG. 24 and 25 but also may be stored in a memory card, a ROM cassette, or a solid state drive (SSD).

A system to which the video encoding method and a video decoding method described above are applied will be described below.

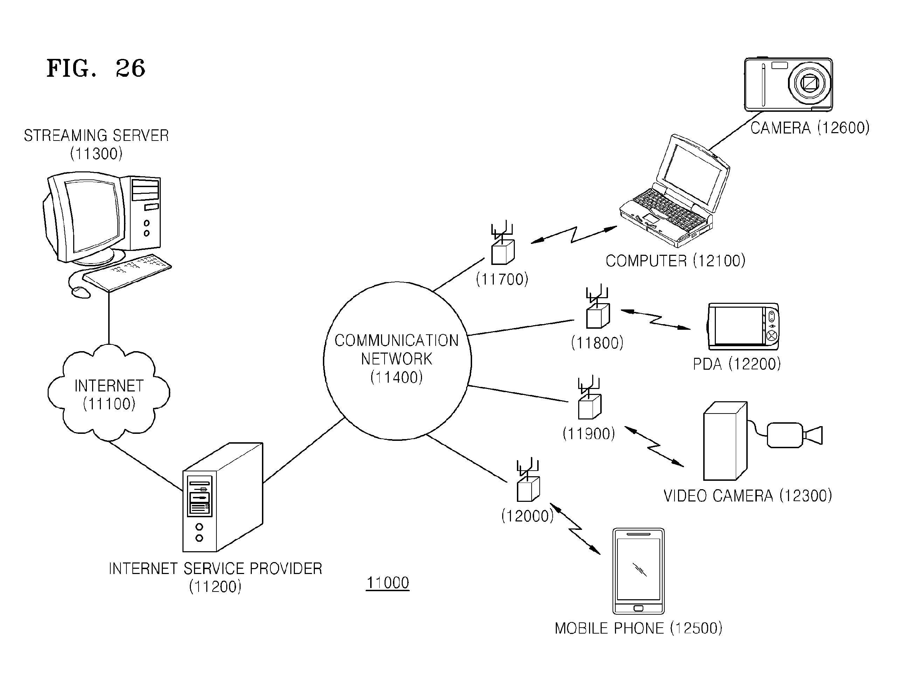

FIG. 26 is a diagram of an overall structure of a content supply system 11000 for providing a content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 24, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer-readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

The content supply system 11000 may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to an embodiment of the present invention.

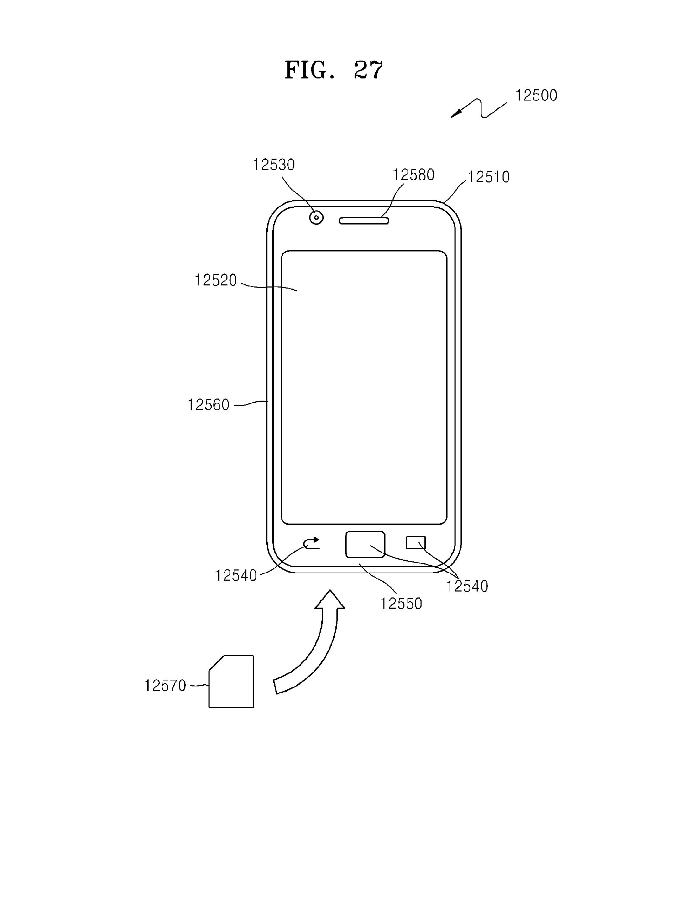

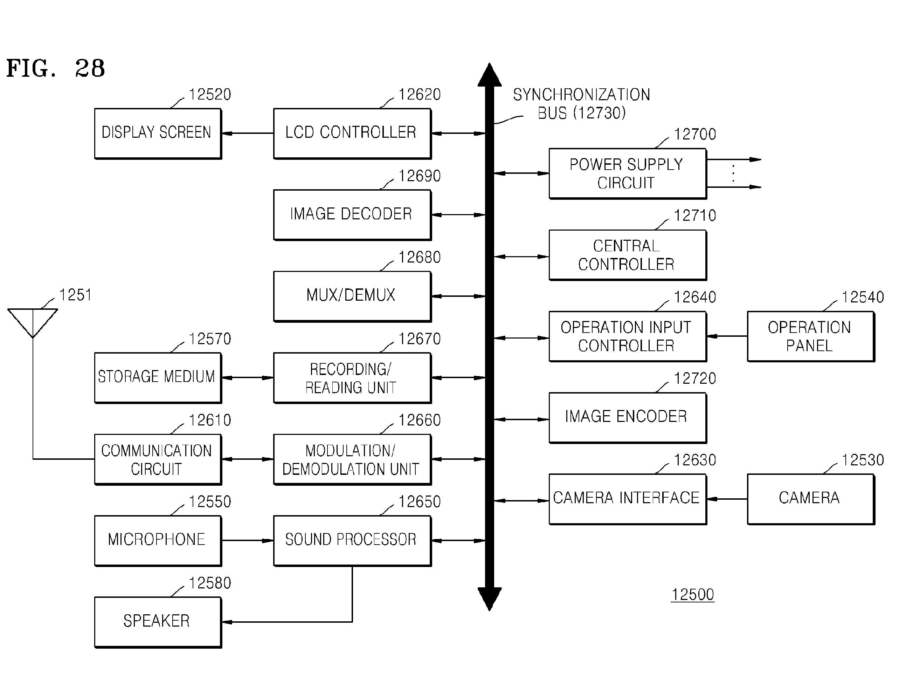

The mobile phone 12500 included in the content supply system 11000 according to an embodiment of the present invention will now be described in greater detail with referring to FIGS. 27 and 28.

FIG. 27 illustrates an external structure of the mobile phone 12500 to which a video encoding method and a video decoding method are applied, according to an embodiment of the present invention. The mobile phone 12500 may be a smart phone, the functions of which are not limited and a large number of the functions of which may be changed or expanded.

The mobile phone 12500 includes an internal antenna 12510 via which a radio-frequency (RF) signal may be exchanged with the wireless base station 12000, and includes a display screen 12520 for displaying images captured by a camera 12530 or images that are received via the antenna 12510 and decoded, e.g., a liquid crystal display (LCD) or an organic light-emitting diode (OLED) screen. The mobile phone 12500 includes an operation panel 12540 including a control button and a touch panel. If the display screen 12520 is a touch screen, the operation panel 12540 further includes a touch sensing panel of the display screen 12520. The mobile phone 12500 includes a speaker 12580 for outputting voice and sound or another type of sound output unit, and a microphone 12550 for inputting voice and sound or another type sound input unit. The mobile phone 12500 further includes the camera 12530, such as a charge-coupled device (CCD) camera, to capture video and still images. The mobile phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 28 illustrates an internal structure of the mobile phone 12500, according to an embodiment of the present invention. To systemically control parts of the mobile phone 12500 including the display screen 12520 and the operation panel 12540, a power supply circuit 12700, an operation input controller 12640, an image encoder 12720, a camera interface 12630, an LCD controller 12620, an image decoder 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a RAM.

While the mobile phone 12500 transmits communication data to the outside, a digital signal is generated by the mobile phone 12500 under control of the central controller 12710. For example, the sound processor 12650 may generate a digital sound signal, the image encoder 12720 may generate a digital image signal, and text data of a message may be generated via the operation panel 12540 and the operation input controller 12640. When a digital signal is transmitted to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12610 via the operation input controller 12640. Under control of the central controller 12610, the text data is transformed into a transmission signal via the modulation/demodulation unit 12660 and the communication circuit 12610 and is transmitted to the wireless base station 12000 via the antenna 12510.

To transmit image data in the data communication mode, image data captured by the camera 12530 is provided to the image encoder 12720 via the camera interface 12630. The captured image data may be directly displayed on the display screen 12520 via the camera interface 12630 and the LCD controller 12620.

A structure of the image encoder 12720 may correspond to that of the video encoding apparatus 100 described above. The image encoder 12720 may transform the image data received from the camera 12530 into compressed and encoded image data according to the aforementioned video encoding method according to the present embodiment, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be transmitted to the multiplexer/demultiplexer 12680.

The multiplexer/demultiplexer 12680 multiplexes the encoded image data received from the image encoder 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoder 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, under control of the central controller 12710.

When in the data communication mode, data of a video file accessed at an Internet website is received, a signal received from the wireless base station 12000 via the antenna 12510 is output as multiplexed data via the modulation/demodulation unit 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoder 12690 and the sound processor 12650, respectively.

A structure of the image decoder 12690 may correspond to that of the video decoding apparatus described above. The image decoder 12690 may decode the encoded video data to obtain restored video data and provide the restored video data to the display screen 12520 via the LCD controller 12620, by using the aforementioned video decoding method according to the present embodiment.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to an embodiment of the present invention, may be a transceiving terminal including only the video encoding apparatus, or may be a transceiving terminal including only the video decoding apparatus.

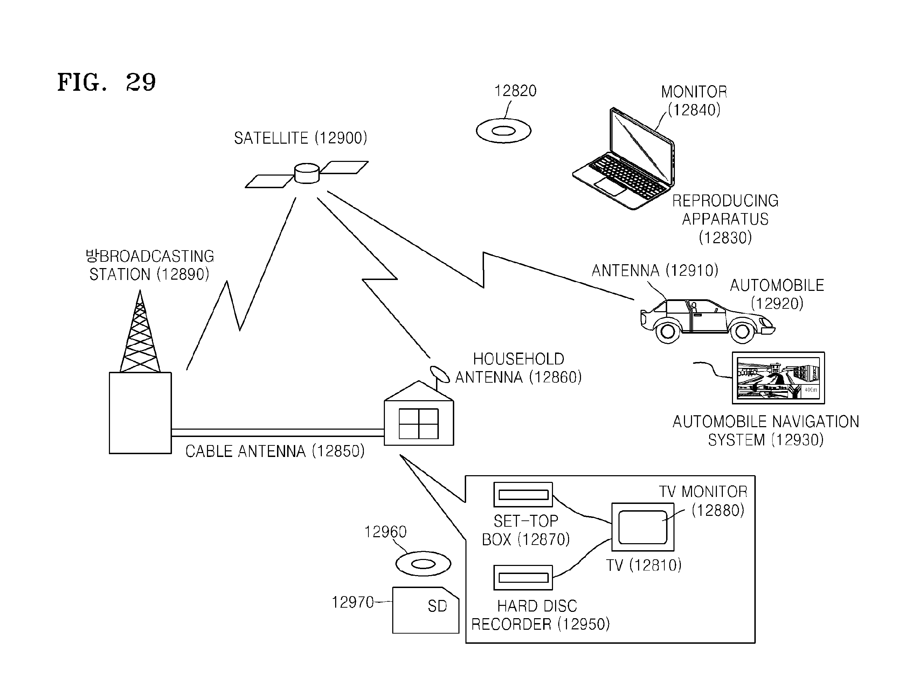

A communication system according to the present invention is not limited to the communication system described above with reference to FIG. 27. For example, FIG. 29 illustrates a digital broadcasting system employing a communication system, according to an embodiment of the present invention. The digital broadcasting system of FIG. 29 may receive a digital broadcast transmitted via a satellite or a terrestrial network by using a video encoding apparatus and a video decoding apparatus according to an embodiment of the present invention.

In more detail, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When a video decoding apparatus according to an embodiment of the present invention is implemented in a reproducing apparatus 12830, the reproducing apparatus 12830 may parse and decode an encoded video stream recorded on a storage medium 12820, such as a disc or a memory card to restore digital signals. Thus, the restored video signal may be reproduced, for example, on a monitor 12840.

In the set-top box 12870 connected to the antenna 12860 for a satellite/terrestrial broadcast or a cable antenna 12850 for receiving a cable television (TV) broadcast, a video decoding apparatus according to an embodiment of the present invention may be installed. Data output from the set-top box 12870 may also be reproduced on a TV monitor 12880.

As another example, a video decoding apparatus according to an embodiment of the present invention may be installed in the TV receiver 12810 instead of the set-top box 12870.

An automobile 12920 that has an appropriate antenna 12910 may receive a signal transmitted from the satellite 12900 or the wireless base station 11700 of FIG. 21. A decoded video may be reproduced on a display screen of an automobile navigation system 12930 installed in the automobile 12920.

A video signal may be encoded by a video encoding apparatus according to an embodiment of the present invention and may then be stored in a storage medium. Specifically, an image signal may be stored in a DVD disc 12960 by a DVD recorder or may be stored in a hard disc by a hard disc recorder 12950. As another example, the video signal may be stored in an SD card 12970. If the hard disc recorder 12950 includes a video decoding apparatus according to an embodiment of the present invention, a video signal recorded on the DVD disc 12960, the SD card 12970, or another storage medium may be reproduced on the TV monitor 12880.

The automobile navigation system 12930 may not include the camera 12530, the camera interface 12630, and the image encoder 12720 of FIG. 26. For example, the computer 12100 and the TV receiver 12810 may not be included in the camera 12530, the camera interface 12630, and the image encoder 12720 of FIG. 26.

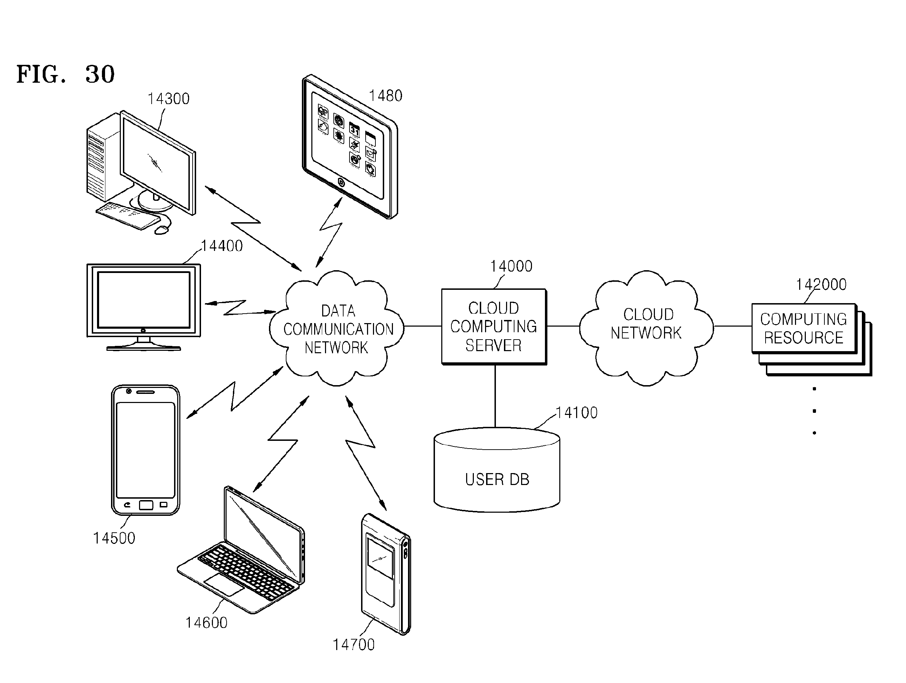

FIG. 30 is a diagram illustrating a network structure of a cloud computing system using a video encoding apparatus and a video decoding apparatus, according to an embodiment of the present invention.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security software, into his/her own terminal in order to use them, but may select and use desired services from among services in a virtual space generated through the virtualization technology, at a desired point in time.

A user terminal of a specified service user is connected to the cloud computing server 14000 via a data communication network including the Internet and a mobile telecommunication network. User terminals may be provided cloud computing services, and particularly video reproduction services, from the cloud computing server 14000. The user terminals may be various types of electronic devices capable of being connected to the Internet, e.g., a desktop PC 14300, a smart TV 14400, a smart phone 14500, a notebook computer 14600, a portable multimedia player (PMP) 14700, a tablet PC 14800, and the like.

The cloud computing server 14000 may combine the plurality of computing resources 14200 distributed in a cloud network and provide user terminals with a result of combining. The plurality of computing resources 14200 may include various data services, and may include data uploaded from user terminals. As described above, the cloud computing server 14000 may provide user terminals with desired services by combining video database distributed in different regions according to the virtualization technology.

User information about users who have subscribed for a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14000 searches for and reproduces this video service, based on the user DB 14100. When the smart phone 14500 receives a video data stream from the cloud computing server 14000, a process of reproducing video by decoding the video data stream is similar to an operation of the mobile phone 12500 described above with reference to FIGS. 27 and 28.

The cloud computing server 14000 may refer to a reproduction history of a desired video service, stored in the user DB 14100. For example, the cloud computing server 14000 receives a request to reproduce a video stored in the user DB 14100, from a user terminal. If this video was being reproduced, then a method of streaming this video, performed by the cloud computing server 14000, may vary according to the request from the user terminal, i.e., according to whether the video will be reproduced, starting from a start thereof or a pausing point thereof. For example, if the user terminal requests to reproduce the video, starting from the start thereof, the cloud computing server 14000 transmits streaming data of the video starting from a first frame thereof to the user terminal. If the user terminal requests to reproduce the video, starting from the pausing point thereof, the cloud computing server 14000 transmits streaming data of the video starting from a frame corresponding to the pausing point, to the user terminal.

In this case, the user terminal may include a video decoding apparatus as described above with reference to FIGS. 1 through 23. In another example, the user terminal may include a video encoding apparatus as described above with reference to FIGS. 1 through 23. Alternatively, the user terminal may include both the video decoding apparatus and the video encoding apparatus as described above with reference to FIGS. 1 through 23.

Various applications of a video encoding method, a video decoding method, a video encoding apparatus, and a video decoding apparatus according to embodiments of the present invention described above with reference to FIGS. 1 through 23 are described above with reference to FIGS. 24 through 30. However, methods of storing the video encoding method and the video decoding method in a storage medium or methods of implementing the video encoding apparatus and the video decoding apparatus in a device described above with reference to FIGS. 24 through 30, according to various embodiments of the present invention, are not limited to the embodiments described above with reference to FIGS. 24 through 30.

While this invention has been particularly shown and described with reference to exemplary embodiments thereof, it will be understood by those of ordinary skill in the art that various changes in form and details may be made therein without departing from the spirit and scope of the invention as defined by the appended claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention.

The embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc.

EP 2 838 262 A1

**Claims**

1. A multiview video inter-layer encoding method comprising:

encoding a base layer image that is one of a base view texture image and a base view depth image of a base view image, based on coding units of a tree structure that comprise coding units that are completely split among coding units obtained by hierarchically splitting a maximum coding unit of an image;
performing prediction encoding on an additional view texture image and an additional view depth image of an additional view image, as separate additional layer images, by referring to a predetermined inter-layer encoding mode and encoding information of the base layer image based on the coding units of the tree structure, wherein the additional view image is not the base layer image but is the other one of the base view texture image and the base view depth image; and
outputting an encoding mode and a prediction value of the base view image, and an inter-layer encoding mode of the additional view image, based on the predetermined inter-layer encoding mode,
wherein each of maximum coding units obtained by spatially splitting the image of a video is split into a plurality of coding units, and it is determined whether to split each of the plurality of coding units into smaller coding units, independently from an adjacent coding unit.

2. The multiview video inter-layer encoding method of claim 1, wherein the encoding of the base layer image comprises encoding one of a base view texture image and a base view depth image, and
wherein the performing of the prediction encoding of the additional view image comprises encoding the other one of the base view texture image and the base view depth image by referring to encoding information according to the predetermined inter-layer encoding mode, wherein the encoding information is generated by encoding one of the base view texture image and the base view depth image.

3. The multiview video inter-layer encoding method of claim 2, wherein the performing of the prediction encoding of the additional view image comprises:

encoding one of the additional view texture image and the additional view depth image; and
encoding the other one of the additional view texture image and the additional view depth image by referring to encoding information according to the predetermined inter-layer encoding mode, wherein the encoding information is generated by encoding one of the base view texture image, the base view depth image, the additional view texture image, and the additional view depth image.

4. The multiview video inter-layer encoding method of claim 1, wherein the performing of the prediction encoding of the additional view image comprises determining a data unit of the base view image that is to be referred to by a data unit of the additional view image, based on a disparity between the base view image and the additional view image.

5. The multiview video inter-layer encoding method of claim 4, wherein the determining of the data unit comprises determining a position of a data unit of the base view image that is mapped with a current data unit of the additional view image, by using a disparity between the current data unit of the additional view image and the base view image, and
wherein the data unit comprises at least one of the maximum coding unit, the coding unit, and a prediction unit, a transformation unit, and a minimum unit that are comprised in the coding unit.

6. The multiview video inter-layer encoding method of claim 5, wherein the determining of the data unit comprises:

determining the disparity between the current data unit of the additional view image and the base view image by using a disparity or depth information that is previously used in the base view depth image or a neighboring data unit of the additional view image; and
determining the position of the data unit of the base view image that is mapped with the current data unit, by using the determined disparity.

7. A multiview video inter-layer decoding method comprising:

parsing encoding information of a base layer image, and an inter-layer encoding mode between the base layer image and an additional layer image, from bitstreams that respectively comprise a base view texture image of a base view image, a base view depth image of the base view image, an additional view texture image of an additional view image, and an additional view depth image of the additional view image, as separate layers;

by using the parsed encoding information of the base layer image, decoding a base layer image that is one of the base view texture image and the base view depth image of the base view image, based on coding units of a tree structure that comprise coding units that are completely split among coding units obtained by hierarchically splitting a maximum coding unit; and

performing prediction decoding on the additional view texture image and the additional view depth image of the additional view image, as separate additional layer images, based on the coding units of the tree structure, by referring to the parsed encoding information of the base layer image according to an inter-layer encoding mode of the additional view image, wherein the additional view image is not the base layer image but is the other one of the base view texture image and the base view depth image,

wherein each of maximum coding units obtained by spatially splitting an image of a video is split into a plurality of coding units, and it was determined whether to separately split each of the plurality of coding units into smaller coding units independently from an adjacent coding unit.

8. The multiview video inter-layer decoding method of claim 7, wherein the decoding of the base layer image comprises decoding one of the base view texture image and the base view depth image, and
wherein the performing of the prediction decoding of the additional view texture image comprises decoding the other one of the base view texture image and the base view depth image by referring to the parsed encoding information of the base layer image according to the inter-layer encoding mode.

9. The multiview video inter-layer decoding method of claim 8, wherein the performing of the prediction decoding of the additional view texture image comprises:

decoding one of the additional view texture image and the additional view depth image; and
decoding the other one of the additional view texture image and the additional view depth image by referring to encoding information of one of the base view texture image, the base view depth image, the additional view texture image, and the additional view depth image according to the inter-layer encoding mode.

10. The multiview video inter-layer decoding method of claim 7, wherein the performing of the prediction decoding of the additional view texture image comprises determining a data unit of the base view image that is to be referred to by a current data unit of the additional view image, by using disparity information between the current data unit of the additional view image and the base view image, and
wherein the data unit comprises at least one of the maximum coding unit, the coding unit, and a prediction unit, a transformation unit, and a minimum unit that are comprised in the coding unit.

11. The multiview video inter-layer decoding method of claim 10, wherein the determining of the data unit comprises determining a position of a data unit of the base view image that is mapped with the current data unit, by using the disparity information between the current data unit of the additional view image and the base view image.

12. The multiview video inter-layer decoding method of claim 10, wherein the determining of the data unit comprises:

determining the disparity information between the current data unit of the additional view image and the base view image by using disparity information or depth information that is previously used in the base view depth image or a neighbouring data unit of the additional view image; and
determining the position of the data unit of the base view image that is mapped with the current data unit, by using the determined disparity information.

13. A multiview video inter-layer encoding apparatus comprising:

a base layer encoder for encoding a base layer image that is one of a base view texture image and a base view depth image of a base view image, based on coding units of a tree structure that comprise coding units that are completely split among coding units obtained by hierarchically splitting a maximum coding unit of an image;
an additional layer encoder for performing prediction encoding on an additional view texture image and an additional view depth image of an additional view image, as separate additional layer images, by referring to a predetermined inter-layer encoding mode and encoding information of the base layer image based on the coding units of the tree structure, wherein the additional view image is not the base layer image but is the other one of the base view texture image and the base view depth image; and

46

an output unit for outputting encoding information of the base view image, and an inter-layer encoding mode of the additional view image, based on the predetermined inter-layer encoding mode,

wherein each of maximum coding units obtained by spatially splitting the image of a video is split into a plurality of coding units, and it is determined whether to separately split each of the plurality of coding units into smaller coding independently from an adjacent coding unit.

14. A multiview video inter-layer decoding apparatus comprising:

a parser for parsing encoding information of a base layer image, and an inter-layer encoding mode between the base layer image and an additional layer image, from bitstreams that respectively comprise a base view texture image of a base view image, a base view depth image of the base view image, an additional view texture image of an additional view image, and an additional view depth image of the additional view image, as separate layers;

a base layer decoder for, by using the parsed encoding information of the base layer image, decoding a base layer image that is one of the base view texture image and the base view depth image of the base view image, based on coding units of a tree structure that comprise coding units that are completely split among coding units obtained by hierarchically splitting a maximum coding unit; and

an additional layer decoder for performing prediction decoding on the additional view texture image and the additional view depth image of the additional view image, as separate additional layer images, based on the coding units of the tree structure, by referring to the parsed encoding information of the base layer image according to an inter-layer encoding mode of the additional view image, wherein the additional view image is not the base layer image but is the other one of the base view texture image and the base view depth image, wherein each of maximum coding units obtained by spatially splitting an image of a video is split into a plurality of coding units, and it was determined whether to separately split each of the plurality of coding units into smaller coding units independently from an adjacent coding unit.

15. A computer-readable recording medium having recorded thereon a program for executing the multiview video inter-layer encoding method of any one of claims 1 and 6.

## FIG. 1

100

110
MAXIMUM CODING UNIT SPLITTER

120
CODING UNIT DETERMINER

130
OUTPUT UNIT

## FIG. 2

200

210
RECEIVER

220
IMAGE DATA AND ENCODING INFORMATION EXTRACTOR

230
IMAGE DATA DECODER

# FIG. 3

64
64×64

64
64×32

32
32×64

32
32×32

32
32×32

32
32×16

16
16×32

16
16×16

16
16×16

16
16×8

8
8×16

8
8×8

8
8×8

8
8×4

4
4×8

4
4×4

315

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

335  325

**FIG. 4**

# FIG. 5

EP 2 838 262 A1

**FIG. 6**

FIG. 6

MAXIMUM CODING UNIT

MAXIMUM HEIGHT AND MAXIMUM WIDTH OF CODING UNIT = 64

MAXIMUM DEPTH=3

600

64 / 610  64×64

64 / 612  64×32

32 / 614  32×64

32 / 616  32×32

32 / 620  32×32

32 / 622  32×16

16 / 624  16×32

16 / 626  16×16

16 / 630  16×16

16 / 632  16×8

8 / 634  8×16

8 / 636  8×8

8 / 640  8×8

8 / 642  8×4

4 / 644  4×8

4 / 646  4×4

PREDICTION UNIT/PARTITION

MINIMUM CODING UNIT

DEEPER CODING UNITS

EP 2 838 262 A1

# FIG. 7

CODING UNIT (710)     TRANSFORMATION UNIT (720)

64

64  64×64

32

32  32×32

# FIG. 8

PARTITION TYPE (800)

2N  802
2N  CU_0
64×64

2N  804
N  0
1

N  806
2N  0  1

N  808
N  0  1
2  3

PREDICTION MODE (810)

812
INTRA MODE

814
INTER MODE

816
SKIP MODE

SIZE OF TRANSFORMATION UNIT(820)

822    824

826    828

INTRA

INTER

# FIG. 9

FIG. 10

CODING UNIT (1010)

FIG. 11

PREDICTION UNIT (1060)

# FIG. 12

1014 — 1016

1022

1032

1048

1054

TRANSFORMATION UNIT (1070)

1050 1052

# FIG. 13

CU ⟍ 1300

| | 1312 | 1314 |
|1302| 1316 | **1318** |
| 1304 | 1306 |

PU

1322　1324　1326　1328　1332　1334　1336　1338
2Nx2N　2NxN　Nx2N　NxN　2NxnU　2NxnD　nLx2N　nRx2N

TU

TU size flag=0 —— 1342

TU size flag=1 —— 1344

TU

TU size flag=0 —— 1352

TU size flag=1 —— 1354

# FIG. 14

1400

1420

ADDITIONAL
LAYER ENCODER

1430

OUTPUTTER

1410

BASE LAYER
ENCODER

# FIG. 15

1500

1530

ADDITIONAL
LAYER DECODER

1510

PARSER

1520

BASE LAYER
DECODER

# FIG. 16

1600

1660  LAYER 1

ADDITIONAL LAYER IMAGE SEQUENCE →

1668 BLOCK SPLITTER → + Σ − → 1670 TRANSFORMER AND QUANTIZER

1675 SCALING AND INVERSE-TRANSFORMATION UNIT

1698

1665 ENCODING CONTROLLER →

1663

1690 MOTION COMPENSATOR

1695 INTRA PREDICTOR

1685 IN-LOOP FILTERING UNIT

1680 STORAGE

1650  INTER-LAYER PREDICTION

1655 IN-LOOP FILTERING UNIT

1610

1635 IN-LOOP FILTERING UNIT

1630 STORAGE

1615 ENCODING CONTROLLER

1640 MOTION COMPENSATOR

1645 INTRA PREDICTOR

1648

1625 SCALER AND INVERSE-TRANSFORMER

BASE LAYER IMAGE SEQUENCE →

1618 BLOCK SPLITTER → + Σ − → 1620 TRANSFORMER AND QUANTIZER

LAYER 0

# FIG. 17

BASE VIEW        FIRST ADDITIONAL VIEW        SECOND ADDITIONAL VIEW

| 1710 | 1715 | 1720 | 1725 | 1730 | 1735 |

YUV TEXTURE IMAGE | DEPTH MAP | YUV TEXTURE IMAGE | DEPTH MAP | · · · | YUV TEXTURE IMAGE | DEPTH MAP

1740 — HEVC VIDEO ENCODER
1745 — DEPTH MAP ENCODER
1750 — FIRST ADDITIONAL VIEW VIDEO ENCODER
1755 — FIRST ADDITIONAL VIEW DEPTH MAP ENCODER
1760 — SECOND ADDITIONAL VIEW VIDEO ENCODER
1765 — SECOND ADDITIONAL VIEW DEPTH MAP ENCODER

1770 — MULTIPLEXER

BITSTREAM

EP 2 838 262 A1

# FIG. 18

3D VIDEO ENCODING INPUT FORMAT 1810

VIDEO PICTURES (1812)

3D VIDEO ENCODER 1815

DEPTH MAPS (1814)

CAMERA PARAMETERS (1816)

TRANSMITTING END

BITSTREAM

3D VIDEO ENCODER OUTPUT FORMAT 1820

MULTIVIEW PICTURES (1822)

3D VIDEO DECODER 1825

DEPTH MAPS (1824)

CAMERA PARAMETERS (1826)

3D RECEIVING END

INTERMEDIATE VIEW SYNTHESIZER 1860

1870

N-VIEW DISPLAY

1830

LEFT AND RIGHT VIEW PICTURES (1832)

STEREO VIDEO DECODER 1835

STEREO RECEIVING END

1850

BITSTREAM EXTRACTOR

1840

2D VIDEO PICTURE (1842)

2D VIDEO DECODER 1845

2D RECEIVING END

1880

STEREO DISPLAY

1890

2D DISPLAY

1800

EP 2 838 262 A1

## FIG. 19

# FIG. 20

EP 2 838 262 A1

# FIG. 21

# FIG. 22

START

ENCODE ONE OF BASE VIEW TEXTURE IMAGE AND BASE VIEW DEPTH IMAGE AS BASE LAYER IMAGE, BASED ON CODING UNITS OF TREE STRUCTURE ⸺ 2210

PERFORM PREDICTION ENCODING ON ADDITIONAL VIEW TEXTURE IMAGE AND ADDITIONAL VIEW DEPTH IMAGE AS ADDITIONAL LAYER IMAGES, BY REFERRING TO ENCODING INFORMATION OF BASE LAYER IMAGE, BASED ON PREDETERMINED INTER-LAYER ENCODING MODE ⸺ 2220

OUTPUT ENCODING MODE AND PREDICTION VALUE OF BASE VIEW IMAGE, AND INTER-LAYER ENCODING MODE, BASED ON PREDETERMINED INTER-LAYER ENCODING MODE ⸺ 2230

END

# FIG. 23

START

PARSE ENCODING INFORMATION OF BASE LAYER IMAGE, AND INTER-LAYER ENCODING MODE, FROM BITSTREAMS RECEIVED AS SEPARATE LAYERS — 2310

DECODE BASE LAYER IMAGE BASED ON CODING UNITS OF TREE STRUCTURE — 2320

DECODE ADDITIONAL LAYER IMAGE ACCORDING TO INTER-LAYER ENCODING MODE, BY REFERRING TO ENCODING INFORMATION OF BASE LAYER IMAGE — 2330

END

# FIG. 24

Se

Tr

DISC (26000)

# FIG. 25

26700

26800

26000

# FIG. 26

STREAMING SERVER
(11300)

CAMERA (12600)

INTERNET
(11100)

COMPUTER (12100)

(11700)

COMMUNICATION
NETWORK
(11400)

(11800)

PDA (12200)

(11900)

VIDEO CAMERA (12300)

INTERNET SERVICE PROVIDER
(11200)

11000

(12000)

MOBILE PHONE (12500)

EP 2 838 262 A1

# FIG. 27

12500

12530    12580    12510

12520

12560

12540

12550

12540

12570

# FIG. 28

DISPLAY SCREEN (12520) — LCD CONTROLLER (12620)

SYNCHRONIZATION BUS (12730)

POWER SUPPLY CIRCUIT (12700)

IMAGE DECODER (12690)

CENTRAL CONTROLLER (12710)

MUX/DEMUX (12680)

OPERATION INPUT CONTROLLER (12640) — OPERATION PANEL (12540)

STORAGE MEDIUM (12570) — RECORDING/READING UNIT (12670)

IMAGE ENCODER (12720)

COMMUNICATION CIRCUIT (12610) — MODULATION/DEMODULATION UNIT (12660)

CAMERA INTERFACE (12630) — CAMERA (12530)

MICROPHONE (12550) — SOUND PROCESSOR (12650)

SPEAKER (12580)

1251

12500

**FIG. 29**

EP 2 838 262 A1

# FIG. 30

EP 2 838 262 A1

## INTERNATIONAL SEARCH REPORT

International application No.

**PCT/KR2013/003187**

### A. CLASSIFICATION OF SUBJECT MATTER

***H04N 7/32(2006.01)i***

According to International Patent Classification (IPC) or to both national classification and IPC

### B. FIELDS SEARCHED

Minimum documentation searched (classification system followed by classification symbols)
H04N 7/32; H04N 13/00; H04N 7/26; H04N 21/63

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: multi-view point, image, video, encoding, decoding, interlayer, basic layer, additional layer, split, multi, layer, decode, encode, basic, sub.

### C. DOCUMENTS CONSIDERED TO BE RELEVANT

| Category* | Citation of document, with indication, where appropriate, of the relevant passages | Relevant to claim No. |
|---|---|---|
| A | KR 10-2010-0028749 A (SK TELECOM CO., LTD.) 15 March 2010 See paragraphs 77-79; figures 5, 6; and claim 17. | 1-15 |
| A | KR 10-2011-0133532 A (ELECTRONICS AND TELECOMMUNICATIONS RESEARCH INSTITUTE) 13 December 2011 See paragraphs 13, 14, 24 and 76; and figure 9. | 1-15 |
| A | KR 10-2012-0034815 A (PANASONIC CORPORATION) 12 April 2012 See paragraphs 201-234; figures 19-21; and claim 1. | 1-15 |
| A | KR 10-2008-0114500 A (ELECTRONICS AND TELECOMMUNICATIONS RESEARCH INSTITUTE et al.) 31 December 2008 See paragraphs 31-33; and figure 4. | 1-15 |
| A | KR 10-2009-0076762 A (SAMSUNG ELECTRONICS CO., LTD. et al.) 13 July 2009 See paragraphs 147-164; and figure 2. | 1-15 |

☐ Further documents are listed in the continuation of Box C.　　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 AUGUST 2013 (26.08.2013) | **26 AUGUST 2013 (26.08.2013)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/003187**

| Patent document cited in search report | Publication date | Patent family member | Publication date |
|---|---|---|---|
| KR 10-2010-0028749 A | 15/03/2010 | KR 10-1012760 B1<br>WO 2010-027142 A2<br>WO 2010-027142 A3 | 08/02/2011<br>29/04/2010<br>11/03/2010 |
| KR 10-2011-0133532 A | 13/12/2011 | CN 102308585 A<br>EP 2375752 A2<br>KR 10-1158491 B1<br>KR 10-2010-0066304 A<br>US 2011-0261883 A1<br>WO 2010-068020 A2<br>WO 2010-068020 A3<br>WO 2010-068020 A9 | 04/01/2012<br>12/10/2011<br>20/06/2012<br>17/06/2010<br>27/10/2011<br>17/06/2010<br>05/08/2010<br>27/10/2011 |
| KR 10-2012-0034815 A | 12/04/2012 | CA 2771433 A1<br>CN 102668567 A<br>MX 2012001738 A<br>SG 178522 A1<br>TW 201215153 A<br>US 2012-0133736 A1<br>WO 2012-020555 A1 | 16/02/2012<br>12/09/2012<br>05/04/2012<br>29/03/2012<br>01/04/2012<br>31/05/2012<br>16/02/2012 |
| KR 10-2008-0114500 A | 31/12/2008 | US 2008-0317124 A1<br>WO 2009-002088 A1 | 25/12/2008<br>31/12/2008 |
| KR 10-2009-0076762 A | 13/07/2009 | KR 10-2009-0077654 A<br>US 2011-0002392 A1<br>US 2012-0014449 A1<br>WO 2009-088195 A2<br>WO 2009-088195 A3<br>WO 2009-088196 A2<br>WO 2009-088196 A3 | 15/07/2009<br>06/01/2011<br>19/01/2012<br>16/07/2009<br>03/09/2009<br>16/07/2009<br>11/09/2009 |

Form PCT/ISA/210 (patent family annex) (July 2009)